# EUROPEAN PATENT APPLICATION

(11) **EP 4 757 449 A1**
(43) Date of publication of application: **10.06.2026**
(21) Application number: 24863258.0
(22) Date of filing: 06.09.2024
(51) Int. Cl.: H04W 68/02, H04W 76/27, H04W 8/26, H04W 52/02

(54) **METHOD AND APPARATUS FOR CARRYING OUT PAGING PROCEDURE IN NEXT GENERATION ENERGY SAVING MOBILE COMMUNICATION SYSTEM**

(30) Priority: 07.09.2023 KR 20230118930
(71) Applicant: Samsung Electronics Co., Ltd., Suwon-si, Gyeonggi-do 16677 (KR)
(72) Inventor: JUNG, Sangyeob, Suwon-si, Gyeonggi-do 16677 (KR); BAE, Beomsik, Suwon-si, Gyeonggi-do 16677 (KR); BAEK, Sangkyu, Suwon-si, Gyeonggi-do 16677 (KR); JUNG, Byounghoon, Suwon-si, Gyeonggi-do 16677 (KR)
(74) Representative: Gulde & Partner
(86) International application number: PCT/KR2024/013518
(87) International publication number: WO 2025/053679

(57) **Abstract**

The disclosure relates to a 5^{th} generation (5G) or 6^{th} generation (6G) communication system for supporting a higher data transmission rate. A method for carrying out a paging procedure in a next generation energy saving mobile communication system is provided. The method includes receiving, from a synchronization cell, information associated with transmission of a paging message, if a terminal is in a radio resource control (RRC) inactive state or an RRC idle state, on the basis of the information associated with transmission of the paging message, receiving the paging message including information indicating the terminal, selecting a data cell, and carrying out an RRC connection procedure with the data cell on the basis of the paging message.

## Description

### [TECHNICAL FIELD]

The disclosure relates to operations of a terminal and of a base station in a mobile communication system.

### [Background Art]

5^{th} generation (5G) mobile communication technologies define broad frequency bands to enable high transmission rates and new services, and can be implemented not only in "Sub 6GHz" bands such as 3.5GHz, but also in "Above 6GHz" bands referred to as millimeter-wave (mmWave) including 28GHz and 39GHz. In addition, it has been considered to implement 6^{th} generation (6G) mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive multiple input and multiple output (MIMO) for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large-capacity data transmission and a polar code for highly reliable transmission of control information, layer 2 (L2) pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR user equipment (UE) Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step random access channel (RACH) for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure is to provide a method in which a UE establishes or resumes a radio resource control (RRC) connection with a data cell in a next-generation mobile communication system supporting network energy saving.

Another aspect of the disclosure is to provide a method in which a UE receives a paging message from a sync cell, and establishes or resumes an RRC connection with a data cell in a next-generation mobile communication system supporting network energy saving.

Another aspect of the disclosure is to provide a method in which a UE receives a short message indicator from a sync cell, receives a paging message from a data cell, and establishes or resumes an RRC connection with the data cell in a next-generation mobile communication system supporting network energy saving.

Another aspect of the disclosure is to provide a method in which a UE receives a short message indicator from a sync cell, and establishes or resumes an RRC connection with a data cell in a next-generation mobile communication system supporting network energy saving.

Another aspect of the disclosure is to provide a signaling exchange method between a central unit (CU) and a distributed unit (DU) in a next-generation mobile communication system supporting network energy saving.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

In accordance with an aspect of the disclosure, a method performed by a terminal in a wireless communication system is provided. The method includes receiving information associated with transmission of a paging message from a synchronization cell in case that the terminal is in a radio resource control (RRC) inactive state or an RRC idle state, receiving the paging message including information indicating the terminal, based on the information associated with the transmission of the paging message, selecting a data cell, and performing an RRC connection procedure with the data cell, based on the paging message.

According to an embodiment, the selecting of the data cell includes transmitting a wake-up signal to at least one data cell in case that there is no appropriate data cell, receiving at least one of a synchronization signal or system information from the at least one data cell, and selecting the data cell from among the at least one data cell, based on the at least one of the synchronization signal or the system information.

According to an embodiment, the paging message is transmitted from one of the synchronization cell or the data cell.

According to an embodiment, the method includes transmitting a wake-up signal to at least one data cell before receiving the paging message, based on reception of the information associated with the transmission of the paging message.

In accordance with another aspect of the disclosure, a method performed by a base station in a wireless communication system is provided. The method includes transmitting information associated with transmission of a paging message to a terminal on a synchronization cell in case that the terminal is in a radio resource control (RRC) inactive state or an RRC idle state, transmitting the paging message including information indicating the terminal to the terminal, based on the information associated with the transmission of the paging message, and receiving a message requesting an RRC connection to a data cell selected by the terminal from the terminal, based on the paging message.

According to an embodiment, the method includes receiving a wake-up signal transmitted to at least one data cell from the terminal in case that there is no appropriate data cell and transmitting at least one of a synchronization signal or system information to the terminal on the at least one data cell.

According to an embodiment, the data cell is selected from among the at least one data cell, based on the at least one of the synchronization signal or the system information.

According to an embodiment, the paging message is transmitted from one of the synchronization cell or the data cell.

According to an embodiment, the method includes receiving a wake-up signal transmitted to at least one data cell from the terminal before transmitting the paging message, based on transmission of information associated with the transmission of the paging message.

In accordance with another aspect of the disclosure, a terminal in a wireless communication system is provided. The terminal includes a transceiver and a controller configured to receive information associated with transmission of a paging message from a synchronization cell through the transceiver in case that the terminal is in a radio resource control (RRC) inactive state or an RRC idle state, receive the paging message including information indicating the terminal through the transceiver, based on the information associated with the transmission of the paging message, select a data cell, and perform an RRC connection procedure with the data cell, based on the paging message.

In accordance with another aspect of the disclosure, a base station in a wireless communication system is provided. The base station includes a transceiver and a controller configured to transmit information associated with transmission of a paging message to a terminal on a synchronization cell through the transceiver in case that the terminal is in a radio resource control (RRC) inactive state or an RRC idle state, transmit the paging message including information indicating the terminal to the terminal through the transceiver, based on the information associated with the transmission of the paging message, and receive a message requesting an RRC connection to a data cell selected by the terminal from the terminal through the transceiver, based on the paging message.

### [Advantageous Effects of Invention]

A method in which a UE establishes or resumes an RRC connection with a data cell in a next-generation mobile communication system supporting network energy saving is provided.

A method in which a UE receives a paging message from a sync cell, and establishes or resumes an RRC connection with a data cell in a next-generation mobile communication system supporting network energy saving is provided.

A method in which a UE receives a short message indicator from a sync cell, receives a paging message from a data cell, and establishes or resumes an RRC connection with the data cell in a next-generation mobile communication system supporting network energy saving is provided.

A method in which a UE receives a short message indicator from a sync cell, and establishes or resumes an RRC connection with a data cell in a next-generation mobile communication system supporting network energy saving is provided.

A signaling exchange method between a CU and a DU in a next-generation mobile communication system supporting network energy saving is provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

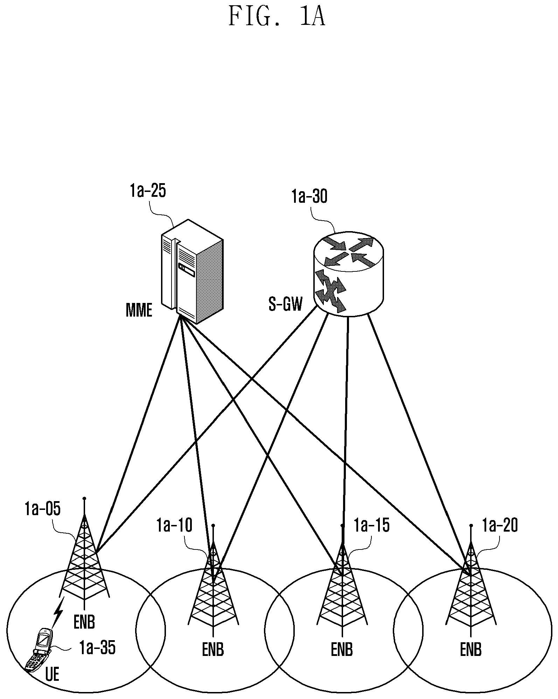

FIG. 1A illustrates a structure of a long term evolution (LTE) system according to an embodiment of the disclosure;

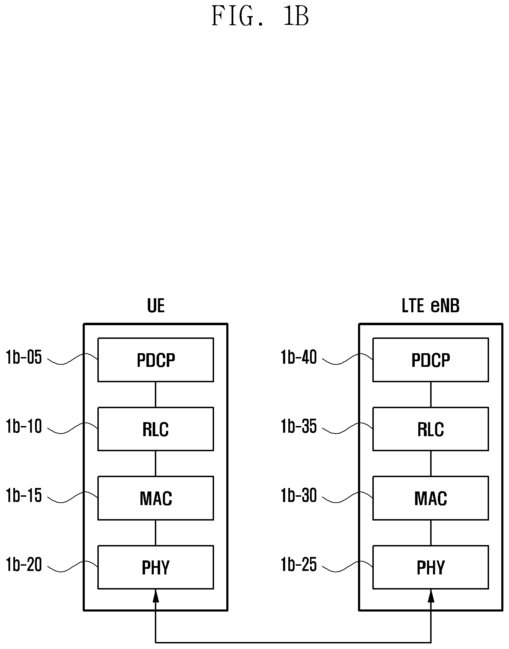

FIG. 1B illustrates a radio protocol structure in an LTE system according to an embodiment of the disclosure;

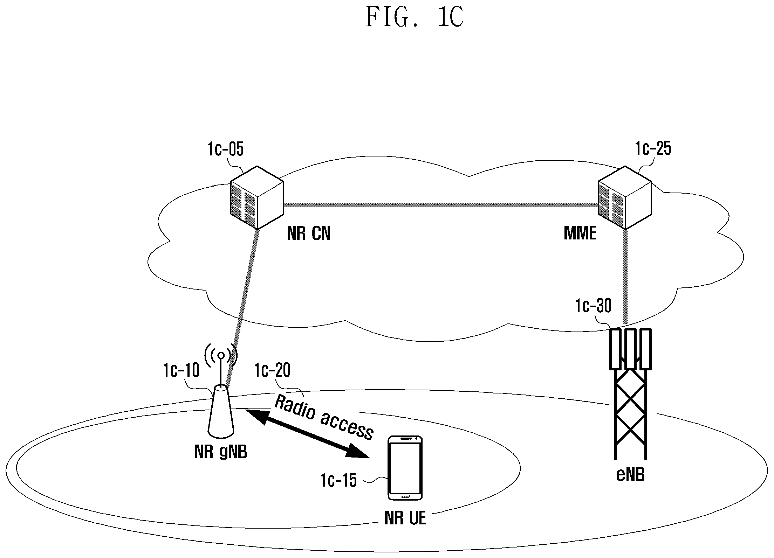

FIG. 1C illustrates a structure of a next-generation mobile communication system according to an embodiment of the disclosure;

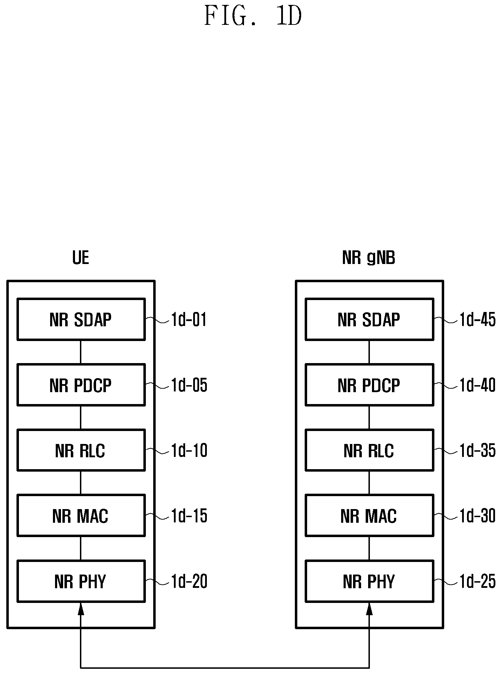

FIG. 1D illustrates a radio protocol structure of a next-generation mobile communication system according to an embodiment of the disclosure;

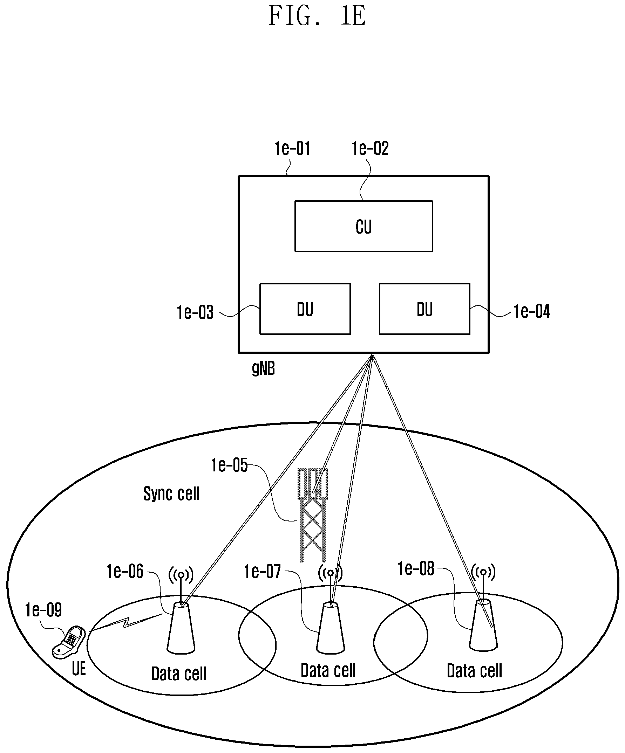

FIG. 1E is a diagram illustrating a structure of a next-generation mobile communication system supporting network energy saving according to an embodiment of the disclosure;

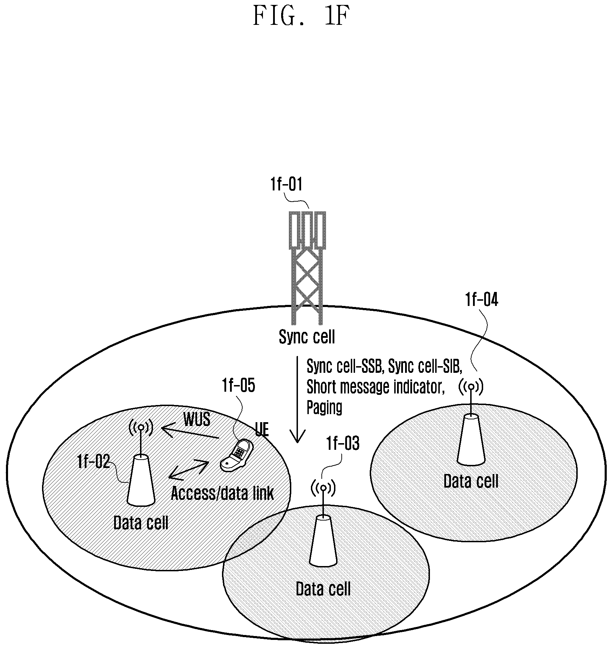

FIG. 1F is a diagram illustrating cells supporting network energy saving according to an embodiment of the disclosure;

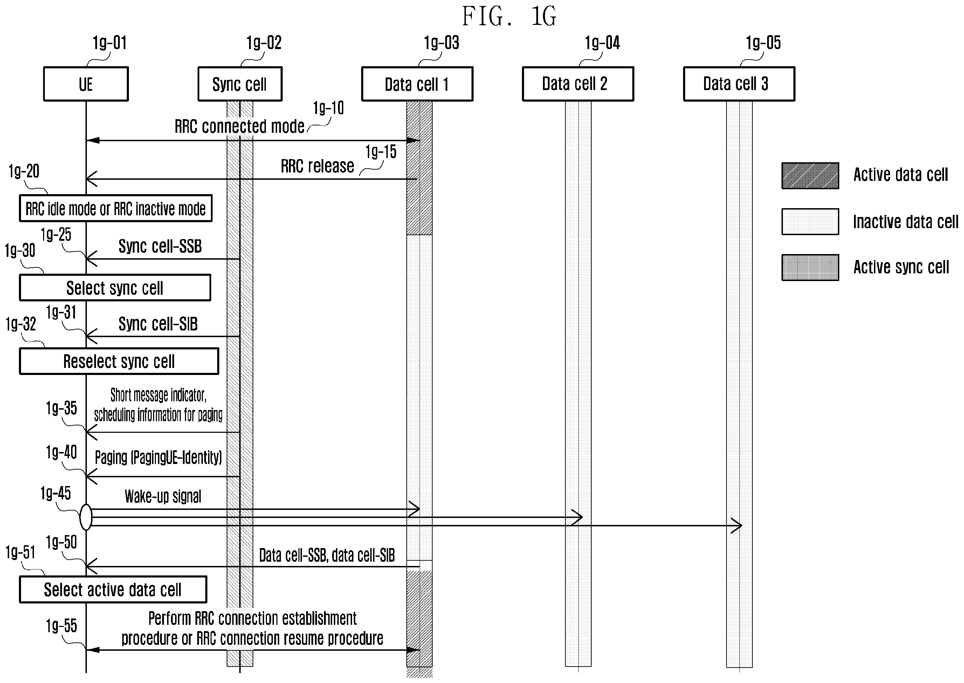

FIG. 1G is a flowchart illustrating an example in which a UE receives a paging message from a sync cell and establishes or resumes an RRC connection with a data cell in a next-generation mobile communication system supporting network energy saving according to an embodiment of the disclosure;

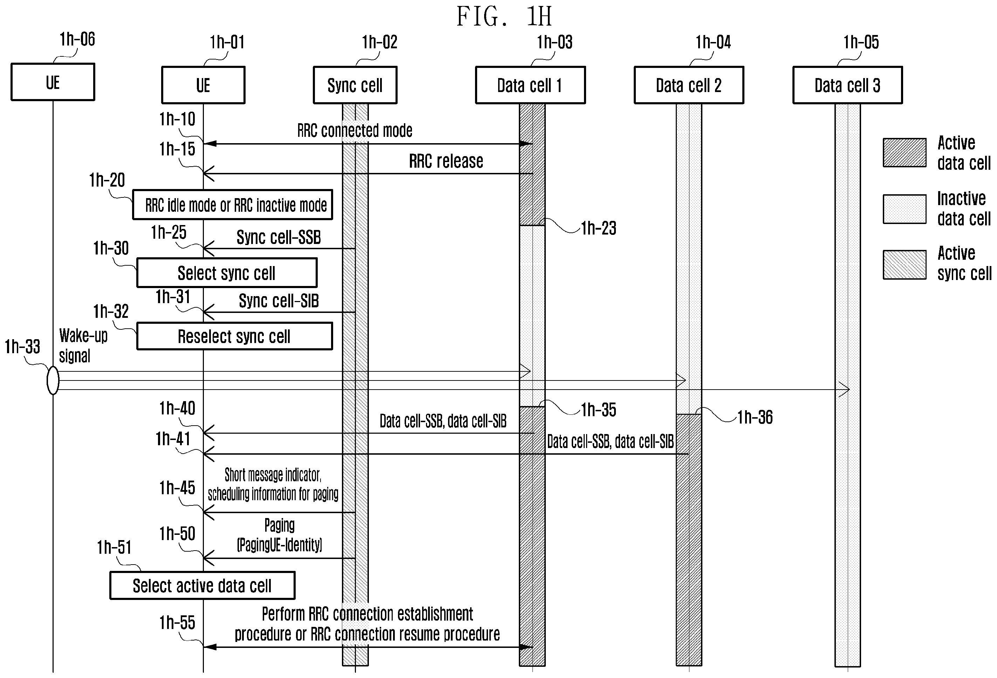

FIG. 1H is a flowchart illustrating another example in which a UE receives a paging message from a sync cell and establishes or resumes an RRC connection with a data cell in a next-generation mobile communication system supporting network energy saving according to an embodiment of the disclosure;

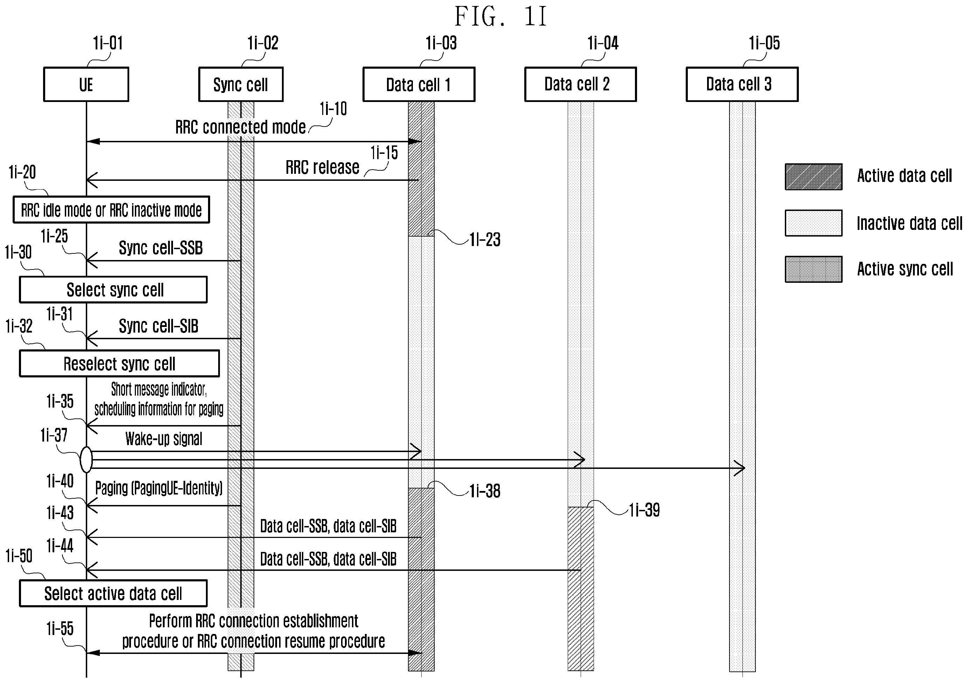

FIG. 1I is a flowchart illustrating another example in which a UE receives a paging message from a sync cell and establishes or resumes an RRC connection with a data cell in a next-generation mobile communication system supporting network energy saving according to an embodiment of the disclosure;

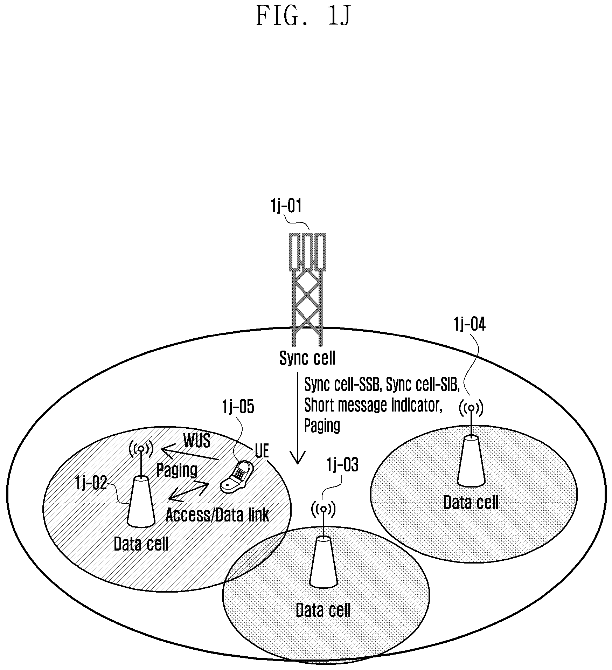

FIG. 1J is a diagram illustrating cells supporting network energy saving according to an embodiment of the disclosure;

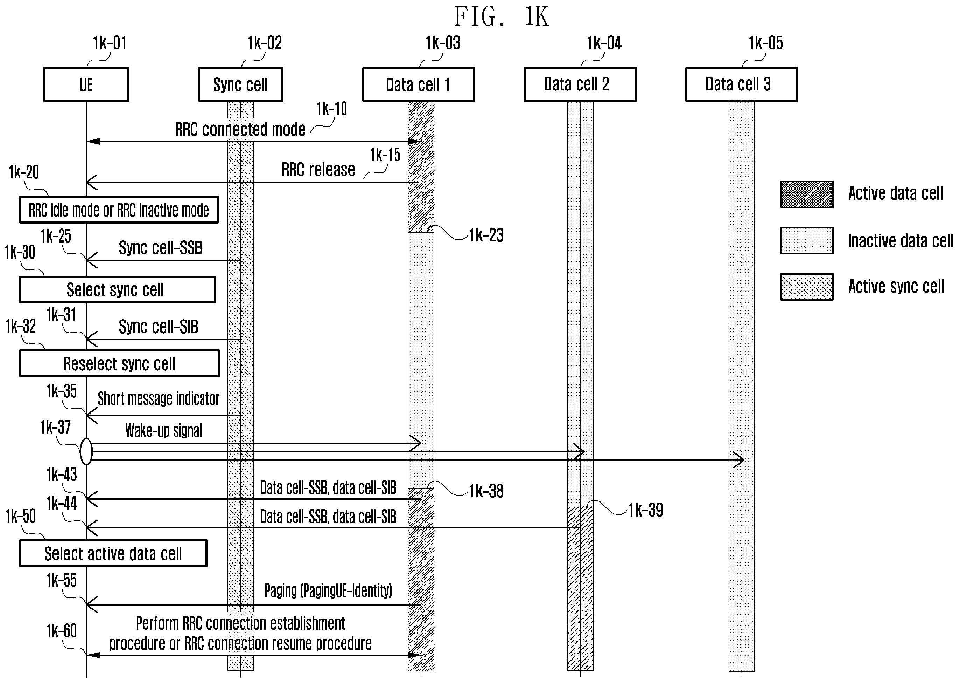

FIG. 1K is a flowchart illustrating that a UE receives a short message indicator from a sync cell, receives a paging message from a data cell, and establishes or resumes an RRC connection with the data cell in a next-generation mobile communication system supporting network energy saving according to an embodiment of the disclosure;

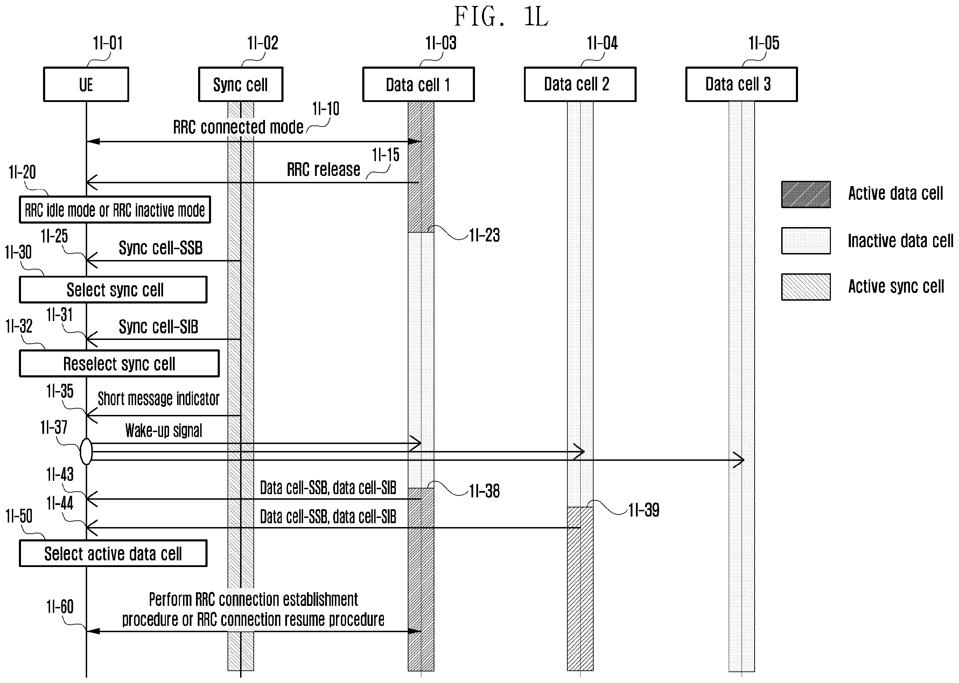

FIG. 1L is a flowchart illustrating that a UE receives a short message indicator from a sync cell, and immediately establishes or resumes an RRC connection to a data cell in a next-generation mobile communication system supporting network energy saving according to an embodiment of the disclosure;

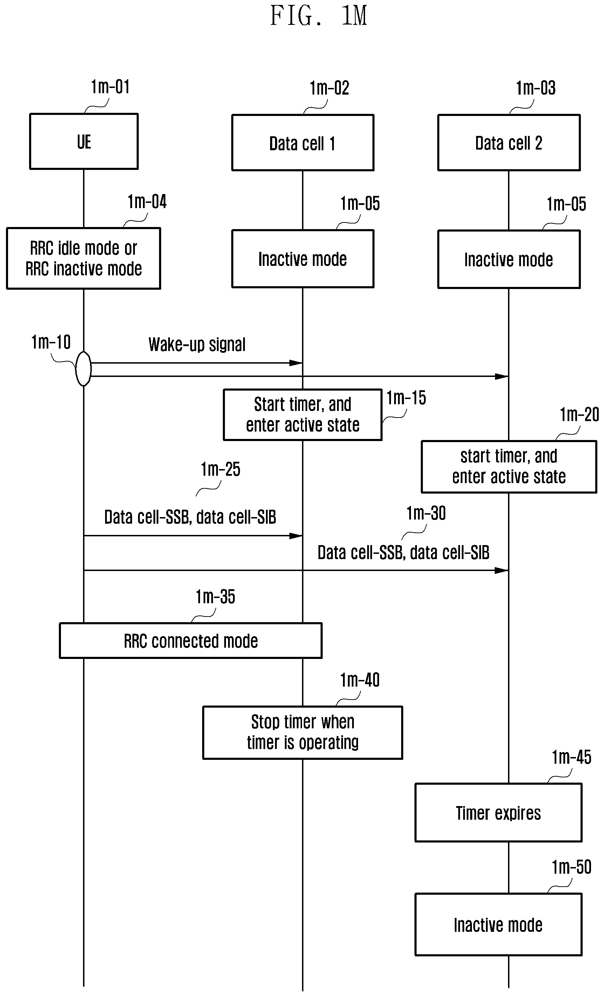

FIG. 1M is a flowchart illustrating a power state change of a data cell in a next-generation mobile communication system supporting network energy saving according to an embodiment of the disclosure;

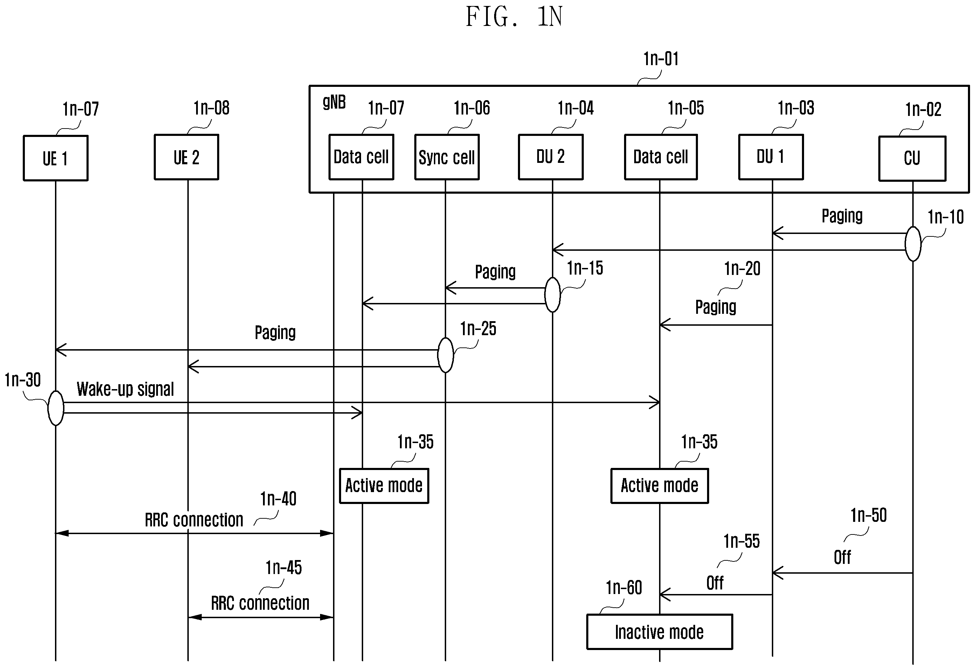

FIG. 1N is a flowchart illustrating a signaling exchange procedure between a CU and a DU in a next-generation mobile communication system supporting network energy saving according to an embodiment of the disclosure;

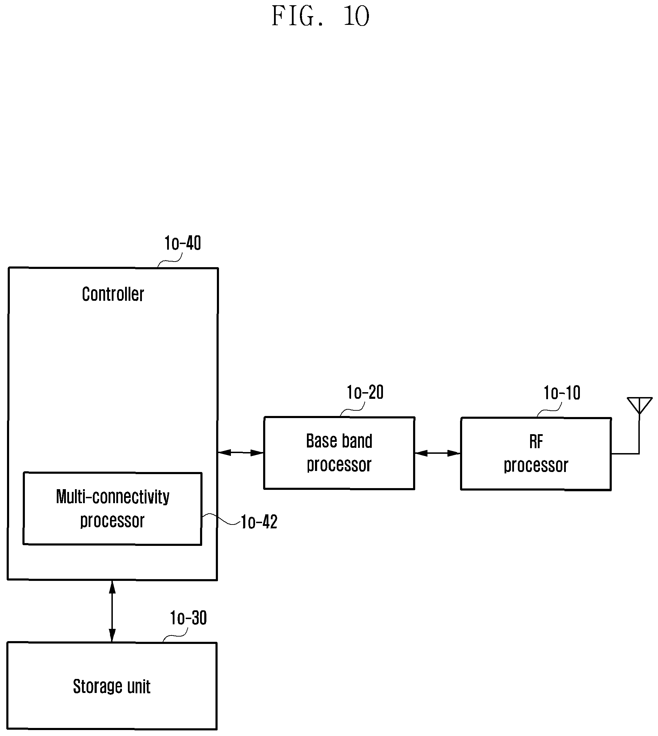

FIG. 1O is a block diagram illustrating an internal structure of a UE according to an embodiment of the disclosure; and

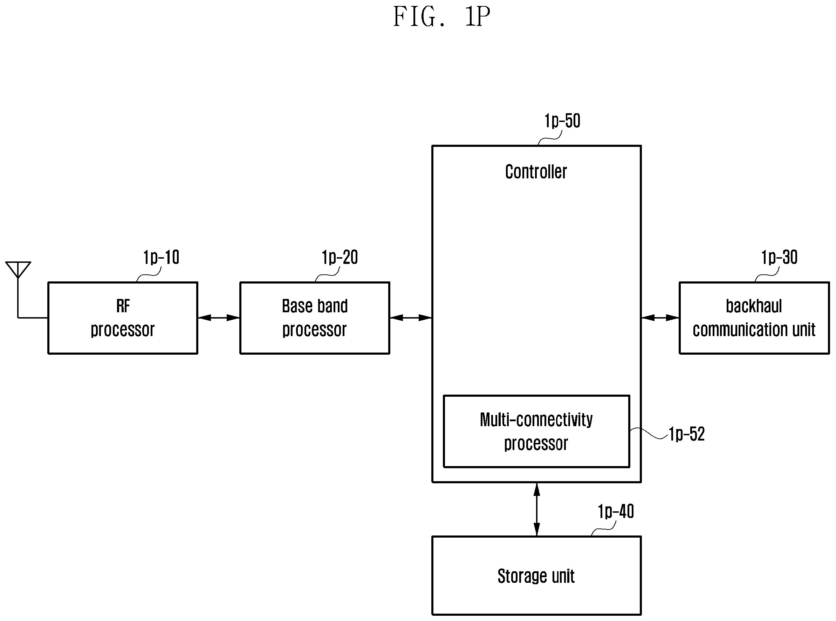

FIG. 1P is a block diagram illustrating a structure of an NR base station according to an embodiment of the disclosure.

### [Mode for the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail in conjunction with the accompanying drawings. The terms which will be described below are terms defined in consideration of the functions in the disclosure. They may be different according to users, intentions of the users, or customs, and therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that execute on the computer or other programmable apparatus provide operations for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit," or divided into a larger number of elements, or a "unit." Moreover, the elements and "units" may be implemented to reproduce one or more central processing units (CPUs) within a device or a security multimedia card.

Particular terms as used in the following description are merely provided to help understanding of the disclosure, and other types of terms may be used without departing from the scope of the technical idea of the disclosure.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB."

FIG. 1A illustrates a structure of an LTE system according to an embodiment of the disclosure.

Referring to FIG. 1A, as illustrated therein, a radio access network of an LTE system may include next-generation base stations (evolved node Bs, hereinafter ENBs, eNBs, node Bs, or base stations) 1a-05, 1a-10, 1a-15, and 1a-20, a mobility management entity (MME) 1a-25, and a serving gateway (S-GW) 1a-30. A user equipment (hereinafter UE or terminal) 1a-35 may access an external network through the ENBs 1a-05 to 1a-20 and the S-GW 1a-30.

In FIG. 1A, the ENBs 1a-05 to 1a-20 each correspond to a conventional node B in a universal mobile telecommunications system (UMTS). The ENBs 1a-05 to 1a-20 are connected to the UE 1a-35 through a radio channel, and perform more complicated roles than the conventional node Bs. In the LTE system, since all user traffic including real-time services, such as voice over internet protocol (IP) (VoIP) via the Internet protocol, is serviced through a shared channel, a device that collects state information, such as buffer states, available transmit power states, and channel states of UEs, and performs scheduling accordingly is required, and the ENBs 1a-05 to 1a-20 serve as the device. In general, one ENB 1a-05 to 1a-20 controls multiple cells. For example, in order to implement a transfer rate of 100 Mbps, the LTE system uses orthogonal frequency division multiplexing (hereinafter referred to as OFDM) as a radio access technology in a bandwidth of, for example, 20MHz. Furthermore, the LTE system employs an adaptive modulation & coding (hereinafter referred to as AMC) scheme for determining a modulation scheme and a channel coding rate according to a channel state of a UE 1a-30. The S-GW 1a-30 is a device that provides a data bearer, and may generate or remove a data bearer under the control of the MME 1a-25. The MME 1a-25 is a device responsible for various control functions as well as a mobility management function for a UE 1a-30, and is connected to multiple base stations 1a-05 to 1a-20.

FIG. 1B illustrates a radio protocol structure in an LTE system according to an embodiment of the disclosure.

Referring to FIG. 1B, a radio protocol of an LTE system may include a packet data convergence protocol (PDCP) 1b-05 or 1b-40, a radio link control (RLC) 1b-10 or 1b-35, and a medium access control (MAC) 1b-15 or 1b-30 on each of UE and eNB sides.

The packet data convergence protocol (PDCP) 1b-05 or 1b-40 is responsible for operations such as IP header compression/reconstruction. The main functions of the PDCP 1b-05 or 1b-40 may be summarized as follows.
- Header compression and decompression: robust header compression (ROHC) only
- Transfer of user data
- In-sequence delivery of upper layer protocol data units (PDUs) at PDCP re-establishment procedure for RLC acknowledged mode (AM)
- For split bearers in dual connectivity (DC) (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter referred to as RLC) 1b-10 or 1b-35 may reconfigure a PDCP protocol data unit (PDU) into an appropriate size to perform an automatic repeat request (ARQ) operation. The main functions of the RLC 1b-10 or 1b-35 may be summarized as follows.
- Transfer of upper layer PDUs
- Error Correction through ARQ (only for AM data transfer)
- Concatenation, segmentation and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 1b-15 or 1b-30 may be connected to several RLC layer devices configured in a single terminal, and multiplex RLC PDUs into an MAC PDU and demultiplex RLC PDUs from an MAC PDU. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through hybrid ARQ (HARQ)
- Priority handling between logical channels of one UE
- Priority handling between UEs by means of dynamic scheduling
- Multimedia broadcast multicast service (MBMS) service identification
- Transport format selection
- Padding

A physical layer (PHY) 1b-20 or 1b-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1C illustrates a structure of a next-generation mobile communication system according to an embodiment of the disclosure.

Referring to FIG. 1C, as illustrated therein, a radio access network of a next-generation mobile communication system (hereinafter NR or 5G) may include a next-generation base station (new radio node B, hereinafter NR gNB, gNB, NR base station, or base station) 1c-10, and a new radio core network (NR CN) 1c-05. A user terminal (new radio user equipment, hereinafter NR UE or terminal) 1c-15 accesses an external network via the NR gNB 1c-10 and the NR CN 1c-05.

In FIG. 1C, the NR gNB 1c-10 corresponds to an evolved node B (eNB) 1c-30 of a conventional LTE system. The NR gNB 1c-10 may be connected to the NR UE 1c-15 through a radio channel and may provide outstanding services as compared to a conventional node B. In the next-generation mobile communication system, since all user traffic is serviced through a shared channel, a device that collects state information, such as buffer statuses, available transmit power states, and channel states of UEs 1c-15, and performs scheduling accordingly is required, and the NR gNB 1c-10 serves as the device. In general, one NR gNB 1c-10 controls multiple cells. In order to implement ultrahigh-speed data transfer beyond the current LTE, the next-generation mobile communication system may have a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE 1c-15. The NR CN 1c-05 may perform functions such as mobility support, bearer configuration, and quality of service (QoS) configuration. The NR CN 1c-05 is a device responsible for various control functions as well as a mobility management function for a UE 1c-15, and may be connected to multiple base stations 1c-10. In addition, the next-generation mobile communication system may interwork with the existing LTE system, and the NR CN 1c-05 may be connected to an MME 1c-25 via a network interface. The MME 1c-25 may be connected to an eNB 1c-30 that is an existing base station.

FIG. 1D illustrates a radio protocol structure of a next-generation mobile communication system according to an embodiment of the disclosure.

FIG. 1D illustrates a radio protocol structure of a next-generation mobile communication system to which the disclosure is applicable.

Referring to FIG. 1D, a radio protocol of a next-generation mobile communication system may include an NR service data adaptation protocol (SDAP) 1d-01 or 1d-45, an NR PDCP 1d-05 or 1d-40, an NR RLC 1d-10 or 1d-35, and an NR MAC 1d-15 or 1d-30, on each of UE and NR base station (NR gNB) sides.

The main functions of the NR SDAP 1d-01 or 1d-45 may include some of functions below.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the access stratum (AS) QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP 1d-05 or 1d-40 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDU received from a lower layer in an order based on PDCP sequence numbers (SNs), and may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, or may include a function of requesting retransmission of lost PDCP PDUs.

The main functions of the NR RLC 1d-10 or 1d-35 may include some of functions below.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of transferring RLC SDUs received from a lower layer to a higher layer in sequence, and may include a function of, if one original RLC SDU is divided into several RLC SDUs and then the RLC SDUs are received, reassembling the several RLC SDUs and transferring the reassembled RLC SDUs, may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, may include a function of requesting retransmission of lost RLC PDUs, may include a function of, if there is a lost RLC SDU, sequentially transferring only RLC SDUs before the lost RLC SDU to an upper layer, may include a function of, although there is a lost RLC SDU, if a predetermined timer has expired, sequentially transferring, to an upper layer, all the RLC SDUs received before the timer is started, or may include a function of, although there is a lost RLC SDU, if a predetermined timer has expired, sequentially transferring all the RLC SDUs received up to the current, to an upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 1d-15 or 1d-30 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR physical (PHY) layer 1d-20 or 1d-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

FIG. 1E is a diagram illustrating a structure of a next-generation mobile communication system supporting network energy saving according to an embodiment of the disclosure.

Referring to FIG. 1E, the next-generation mobile communication system supporting network energy saving may include a next-generation base station 1e-01 (g Node B (gNB), Node B, or base station), a synchronization cell (sync cell) 1e-05, data cells 1e-06, 1e-07, and 1e-08, and a user equipment (UE or terminal) 1e-09.

The gNB 1e-01 may include a central unit (CU) 1e-02 and one or more distributed units (DUs) 1e-03 and 1e-04. The CU 1e-02 may support one or more DUs 1e-03 and 1e-04, and a single DU 1e-03 or 1e-04 may support only one or more sync cells 1e-05, may support one or more data cells 1e-06, 1e-07, and 1e-08, or may simultaneously support one or more sync cells 1e-05 and one or more data cells 1e-06, 1e-07, and 1e-08.

The UE 1e-09 may access an external network via the gNB 1e-01 through the data cell 1e-06, 1e-07, or 1e-08.

FIG. 1F is a diagram illustrating cells supporting network energy saving according to an embodiment of the disclosure.

Referring to FIG. 1F, a sync cell 1f-01 may be powered on. A cell that is in a powered-on state may be referred to as active, and the sync cell 1f-01 according to the disclosure may be always active. Main functions of the active sync cell may include some of the following functions.
- Broadcast of sync cell-synchronization signal block (SSB)
- Broadcast of sync cell-system information block (SIB)
- Transmission of short message indicator
   **■** A short message indicator may be transmitted through a downlink control indicator or downlink control information (DCI) with a cyclic redundancy check (CRC) scrambled by a paging-radio network temporary identifier (P-RNTI). The short message indicator may include at least one of the following.
      ◆ Indicator indicating that only a short message exists in the DCI
      ◆ Indicator indicating that only paging scheduling information exists in the DCI
      ◆ Indicator indicating that both a short message and paging scheduling information exist in the DCI
      ◆ Indicator indicating whether a paging message exists
- Transmission of short message
   **■** The short message may be transmitted through DCI in which a CRC is scrambled with a P-RNTI. That is, the short message may be transmitted through the same DCI as the short message indicator. The short message may include at least one of the following messages.
      ◆ Indicator indicating that predetermined system information among pieces of synchronization cell system information has been modified
      ◆ Indicator indicating whether there is a disaster notification among the pieces of synchronization cell system information
         - The disaster notification may refer to earthquake & tsunami warning system (ETWS) and/or commercial mobile alert service (CMAS) notifications.
- Transmission of paging message
- Mobility support of RRC_IDLE or RRC_INACTIVE UE

As described above, the sync cell 1f-01 may operate in a low-frequency band (e.g., 700 MHz) in which wide coverage is easily secured in order to transmit a control signal to a UE 1f-05 and efficiently support mobility of a UE in an RRC idle mode or RRC inactive mode.

Data cells 1f-02, 1f-03, and 1f-04 may operate by separately including a wake-up receiver (hereinafter, WUR) that is capable of receiving a wake-up signal (hereinafter, WUS) transmitted by the UE 1f-05 and a main transceiver or main radio (hereinafter, MR) that is capable of transmitting/receiving all control signals and data other than the WUR to/from the UE 1f-05. Since it is difficult to predict when the UE 1f-05 transmits a WUS, the data cells 1f-02, 1f-03, and 1f-04 may always operate by powering on the WUR. However, when there is no data transmission between the UE 1f-05 and the data cells 1f-02, 1f-03, and 1f-04 for a predetermined time, the data cells 1f-02, 1f-03, and 1f-04 may power off or power on the MR for efficient energy saving. A cell state in which the MRs of the data cells 1f-02, 1f-03, and 1f-04 are powered off may be referred to as inactive, and a cell state in which the MRs of the data cells 1f-02, 1f-03, and 1f-04 are powered on may be referred to as active. The data cells 1f-02, 1f-03, and 1f-04 according to the disclosure may become active data cells or inactive data cells according to a predetermined condition. For example, a particular data cell 1f-02 may change the state from inactive to active when receiving a wake-up signal (WUS) transmitted by the UE 1f-05 at a specific signal strength or higher. Main functions of the active data cell 1f-02 may include some of the following functions.
- Reception of wake-up signal (WUS) transmitted by UE
- Broadcast of data cell-synchronization signal block (SSB)
- Broadcast of data cell-system information (SIB)
- Support of random access procedure
- Support of RRC_CONNECTED UE and mobility thereof

The main function of an inactive data cell 1f-03 or 1f-04 may include some of the following functions.
- Reception of wake-up signal (WUS) transmitted by the UE

Main functions of the UE 1f-05 may include some of the following functions.
- Sync cell selection or sync cell reselection for mobility support in RRC inactive mode or RRC idle mode
- Reception of paging message transmitted by sync cell
- Performance of random access procedure with data cell and RRC connection establishment with data cell
- Data transmission/reception to/from data cell in RRC connected mode

FIG. 1G is a flowchart illustrating an example in which a UE receives a paging message from a sync cell and establishes or resumes an RRC connection with a data cell in a next-generation mobile communication system supporting network energy saving according to an embodiment of the disclosure.

Referring to FIG. 1G, a UE 1g-01 may establish an RRC connection with active data cell 1 1g-03 and be in an RRC connected mode (RRC_CONNECTED) (operation 1g-10). Data cell 1 1g-03 may be in an active state, and remaining data cells 1g-04 and 1g-05 may be in an inactive state.

In operation 1g-15, active data cell 1 1g-03 may transmit an RRC connection release message (RRCRelease) to the UE 1g-01 to transition the UE 1g-01 from the RRC connected mode to an RRC inactive mode (RRC_INACTIVE) or RRC idle mode (RRC_IDLE). For reference, active data cell 1 1g-03 may transmit the message (RRC connection release message) received from a CU in a base station of the cell to the UE 1g-01. The message may include RRC inactive mode configuration information. The RRC inactive mode configuration information may include at least one of the following.
- Full UE connection resume identifier (FullI-RNTI)
   **■** Identifier used to identify reserved UE context of the UE 1g-01, which may be configured with x bits (x being a positive integer). A sync cell 1g-02 may use the identifier when transmitting a RAN-initiated paging message to the UE 1g-01 in the RRC inactive mode.
- RAN paging cycle (ran-PagingCycle)
   **■** UE-specific paging cycle allocated by the base station to the UE 1g-01, which may be configured as a value of a specific radio frame. The UE 1g-01 may use the same to determine a timing for monitoring a paging occasion.
- RAN notification area information (ran-NotificationAreaInfo)
   **■** Configured for the sync cell 1g-02 to identify the location of a UE 1g-01 when the UE 1g-01 is the RRC inactive mode. The area information may include one or a plurality of sync cell lists or one or a plurality of RAN area configurations. A RAN area configuration may include at least one of an identifier indicating a mobile communication network to which the UE 1g-01 subscribes, and a RAN area. The RAN area may be configured by a single tracking area code (TAC), or by one tracking area code and one or multiple RAN area codes.

In operation 1g-20, the UE 1g-01 may transition from the RRC connected mode (RRC_CONNECTED) to the RRC idle mode (RRC_IDLE) or the RRC inactive mode (RRC_INACTIVE). For example, upon receiving the RRC connection release message including the inactive mode configuration information in operation 1g-15, the UE 1g-01 may transition to the RRC inactive mode by applying the message. When receiving the RRC connection release message having no active mode configuration information in operation 1g-15, the UE 1g-01 may transition to the RRC idle mode by applying the message.

In operation 1g-23, active data cell 1 1g-03 may be changed to the inactive state by a predetermined condition. For example, active data cell 1 1g-03 may be changed to the inactive state when not receiving a predetermined signal (e.g., a wake-up signal (WUS) transmitted by the UE 1g-01) from the UE 1g-01 for a certain time after transmitting the RRC connection release message.

In operation 1g-25, the UE 1g-01 in the RRC inactive mode or RRC idle mode may receive a synchronization signal (sync cell-synchronization signal block, hereinafter, sync cell-SSB) transmitted by the sync cell 1g-02. The UE 1g-01 may select or camp on the sync cell 1g-02 (operation 1g-30). For example, when a signal quality of a sync cell selection reception signal derived from the received sync cell-SSB exceeds a predetermined threshold value, the UE 1g-01 may camp on the sync cell 1g-02.

In operation 1g-31, the UE 1g-01 may receive a synchronization cell-system information block (hereinafter, sync cell-SIB) transmitted by the sync cell 1g-02. The UE 1g-01 may perform a sync cell reselection procedure (operation 1g-32).

According to an embodiment, the sync cell-SSB (1g-25) and the sync cell-SIB (1g-31) may be periodically transmitted. In the disclosure, at least one of the following pieces of information may be included and transmitted through at least one of the sync cell-SSB and sync cell-SIB.
- Time/frequency resource for the UE 1g-01 to transmit a wake-up signal (WUS)
- Configuration information required for selecting or reselecting a sync cell
   **■** One or plurality of sync cell identifiers
   **■** One or plurality of frequencies on which sync cells operate
   **■** Cell reselection priority for each sync cell frequency
   **■** Parameter or threshold value required for selecting or reselecting a sync cell
- Each sync cell and data cell information (e.g., data cell identifier and data area code) associated with each sync cell
- Configuration information required for receiving DCI including at least one of a short message indicator, a short message, and paging message scheduling information
- Configuration information required for receiving a paging message

In operation 1g-35, the UE 1g-01 in the RRC inactive mode or RRC idle mode may monitor a paging occasion according to a specific period. That is, the UE 1g-01 may monitor a paging occasion and receive scheduling information for receiving a paging message to be transmitted by the sync cell 1g-02. Specifically, the UE 1g-01 may monitor a paging occasion, receive DCI with a CRC scrambled by a P-RNTI from the sync cell 1g-02, and receive scheduling information for receiving a paging message.

In operation 1g-40, the UE 1g-01 in the RRC inactive mode or RRC idle mode may receive a paging message transmitted by the sync cell 1g-02. The paging message may include a paging record including a UE identifier (e.g., a paging UE identifier, PagingUE-Identity) for paging the UE 1g-01. Here, when the paging message is a (RAN-initiated) paging message initiated by the base station, the UE identifier may refer to a UE identifier (e.g., the full UE connection resume identifier included in the RRC connection release message) capable of identifying the UE in the RRC inactive mode. When the paging message is a (CN-initiated) paging message initiated by a core network, the UE identifier may refer to a temporary UE identifier (e.g., a 5G S-temporary mobile subscription identifier (5G-S-TMSI)) capable of uniquely identifying the UE in the RRC idle mode in a specific area (e.g., a tracking area), which is a UE identifier provided to the UE 1g-01 by the core network. For reference, the sync cell 1g-02 may transmit the message (paging message) received from the CU in the base station of the cell to the UE 1g-01. The CU in the base station may additionally transmit the message or some of pieces of information included in the message to the data cells 1g-03, 1g-04, and 1g-05, which is to enable the data cells, when the UE 1g-01 later attempts to establish an RRC connection with the data cells 1g-03, 1g-04, and 1g-05, to know that the RRC connection is established due to the paging.

In operation 1g-45, the UE 1g-01 in the RRC idle mode or RRC inactive mode may transmit a wake-up signal (WUS) to wake up an inactive data cell. The wake-up signal transmitted by the UE 1g-01 may be a dedicated signal for waking only a particular inactive data cell, or may be a common signal for commonly waking all inactive data cells (or all inactive data cells associated with a particular sync cell). For reference, for network energy saving, only an inactive data cell 1g-03 that satisfies a predetermined condition among the inactive data cells 1g-03, 1g-04, and 1g-05 having received the WUS may be powered on to become an active data cell 1g-46. For example, when the received signal strength of the WUS exceeds a specific threshold value, or through negotiations among the data cells that having received the WUS, only a data cell having received the WUS with a highest strength may become an active data cell. For reference, operation 1g-45 may be performed even when there are active data cells.

In operation 1g-50, the UE 1g-01 in the RRC idle mode or RRC inactive mode may receive a data cell synchronization signal (data cell-SSB) and/or data cell system information (data cell-SIB) transmitted by active data cell 1 1g-03, and select active data cell 1 1g-03 (operation 1g-51).

In operation 1g-55, the UE 1g-01 in the RRC idle mode or RRC inactive mode may establish an RRC connection with active data cell 1 1g-03. For example, when the UE 1g-01 is in the RRC idle mode, the UE 1g-01 may perform an RRC connection establishment procedure with active data cell 1 1g-03 to establish an RRC connection. When the UE 1g-01 is in the RRC inactive mode, the UE 1g-01 may perform an RRC connection resume procedure with active data cell 1 1g-03 to establish an RRC connection.

The sync cell 1g-02 according to the disclosure transmits a paging message to the UE 1g-01, but does not establish an RRC connection directly with the UE 1g-01. However, the data cell 1g-03 does not transmit a paging message to the UE 1g-01, but establishes an RRC connection directly with the UE 1g-01.

The UE 1g-01 according to the disclosure receives a paging message transmitted by the sync cell 1g-02, and transmits a wake-up signal to the data cells 1g-03, 1g-04, and 1g-05 to establish with an RRC connection with the 1g-03 when the paging message includes a paging UE identifier for waking up the UE 1g-01.

FIG. 1H is a flowchart illustrating another example in which a UE receives a paging message from a sync cell and establishes or resumes an RRC connection with a data cell in a next-generation mobile communication system supporting network energy saving according to an embodiment of the disclosure.

Referring to FIG. 1H, a UE 1h-01 may establish an RRC connection with active data cell 1 1h-03 and be in an RRC connected mode (RRC_CONNECTED) (operation 1h-10). Data cell 1 1h-03 may be in an active state, and remaining data cells 1h-04 and 1h-05 may be in an inactive state.

In operation 1h-15, active data cell 1h-03 may transmit an RRC connection release message (RRCRelease) to the UE 1h-01 to transition the UE 1h-01 from the RRC connected mode to an RRC inactive mode (RRC_INACTIVE) or RRC idle mode (RRC_IDLE). For reference, active data cell 1 1h-03 may transmit the message (RRC connection release message) received from a CU in a base station of the cell to the UE 1h-01. The message may include RRC inactive mode configuration information. The RRC inactive mode configuration information may include at least one of the following.
- Full UE connection resume identifier (FullI-RNTI)
   **■** Identifier used to identify reserved UE context of the UE 1h-01, which may be configured with x bits (x being a positive integer). A sync cell 1h-02 may use the identifier when transmitting a RAN-initiated paging message to the UE 1h-01 in the RRC inactive mode.
- RAN paging cycle (ran-PagingCycle)
   ■ UE-specific paging cycle allocated by the base station to the UE 1h-01, which may be configured as a value of a specific radio frame. The UE 1h-01 may use the same to determine a timing for monitoring a paging occasion.
- RAN notification area information (ran-NotificationAreaInfo)
   **■** Configured for the sync cell 1h-02 to identify the location of a UE 1h-01 when the UE 1h-01 is the RRC inactive mode. The area information may include one or a plurality of sync cell lists or one or a plurality of RAN area configurations. A RAN area configuration may include at least one of an identifier indicating a mobile communication network to which the UE 1h-01 subscribes, and a RAN area. The RAN area may be configured by a single tracking area code (TAC), or by one tracking area code and one or multiple RAN area codes.

In operation 1h-20, the UE 1h-01 may transition from the RRC connected mode (RRC_CONNECTED) to the RRC idle mode (RRC_IDLE) or the RRC inactive mode (RRC_INACTIVE). For example, upon receiving the RRC connection release message including the inactive mode configuration information in operation 1h-15, the UE 1h-01 may transition to the RRC inactive mode by applying the message. When receiving the RRC connection release message having no active mode configuration information in operation 1h-15, the UE 1h-01 may transition to the RRC idle mode by applying the message.

In operation 1h-23, active data cell 1 1h-03 may be changed to the inactive state by a predetermined condition. For example, active data cell 1 1h-03 may be changed to the inactive state when not receiving a predetermined signal (e.g., a wake-up signal (WUS) transmitted by the UE 1h-01) from the UE 1h-01 for a certain time after transmitting the RRC connection release message.

In operation 1h-25, the UE 1h-01 in the RRC inactive mode or RRC idle mode may receive a synchronization signal (sync cell-SSB) transmitted by the sync cell 1h-02. The UE 1h-01 may select or camp on the sync cell 1h-02 (operation 1h-30). For example, when a signal quality of a sync cell selection reception signal derived from the received sync cell-SSB exceeds a predetermined threshold value, the UE 1h-01 may camp on the sync cell 1h-02.

In operation 1h-31, the UE 1h-01 may receive a synchronization cell-system information block (sync cell-SIB) transmitted by the sync cell 1h-02. The UE 1h-01 may perform a sync cell reselection procedure (operation 1h-32).

According to an embodiment, the sync cell-SSB (1h-25) and the sync cell-SIB (1h-31) may be periodically transmitted. In the disclosure, at least one of the following pieces of information may be included and transmitted through at least one of the sync cell-SSB and sync cell-SIB.
- Time/frequency resource for the UE 1h-01 to transmit a wake-up signal (WUS)
- Configuration information required for selecting or reselecting a sync cell
   **■** One or plurality of sync cell identifiers
   **■** One or plurality of frequencies on which sync cells operate
   **■** Cell reselection priority for each sync cell frequency
   **■** Parameter or threshold value required for selecting or reselecting a sync cell
- Each sync cell and data cell information (e.g., data cell identifier and data area code) associated with each sync cell
- Configuration information required for receiving DCI including at least one of a short message indicator, a short message, and paging message scheduling information
- Configuration information required for receiving a paging message

In operation 1h-33, a UE 1h-06 may transmit a wake-up signal (WUS) to wake up an inactive data cell. The wake-up signal transmitted by the UE 1h-06 may be a dedicated signal for waking only a particular inactive data cell, or may be a common signal for commonly waking all inactive data cells (or all inactive data cells associated with a particular sync cell). All inactive data cells 1h-03, 1h-04, and 1h-05 having received the WUS among the inactive data cells 1h-03, 1h-04, and 1h-05 may be powered on to become active data cells, or only inactive data cells that satisfy a predetermined condition (e.g., a received signal strength of the WUS exceeding a specific threshold value) may be switched to active data cells. In the disclosure, for convenience of description, inactive data cell 1 1h-03 may be switched to the active state (1h-35), inactive data cell 2 1h-04 may be switched to the active state (1h-36), and data cell 3 1h-04 may remain in the inactive state.

In operation 1h-40, active data cell 1 1h-03 may transmit a data cell synchronization signal (data cell-SSB) and/or data cell system information (data cell-SIB). According to an embodiment, the data cell-SSB and/or data cell-SIB may be periodically transmitted, or transmitted in response to a request of the UE 1h-01.

In operation 1h-41, active data cell 2 1h-04 may transmit a data cell synchronization signal (data cell-SSB) and/or data cell system information (data cell-SIB). According to an embodiment, the data cell-SSB and/or data cell-SIB may be periodically transmitted, or transmitted in response to a request from the UE 1h-01.

In operation 1h-45, the UE 1h-01 in the RRC inactive mode or RRC idle mode may monitor a paging occasion according to a specific period. That is, the UE 1h-01 may monitor a paging occasion and receive scheduling information for receiving a paging message to be transmitted by the sync cell 1h-02. Specifically, the UE 1h-01 may monitor a paging occasion, receive DCI with CRC scrambled by a P-RNTI from the sync cell 1h-02, and receive scheduling information for receiving a paging message.

In operation 1h-50, the UE 1h-01 in the RRC inactive mode or RRC idle mode may receive a paging message transmitted by the sync cell 1h-02. The paging message may include a paging record including a UE identifier (e.g., a paging UE identifier, PagingUE-Identity) for paging the UE. Here, when the paging message is a (RAN-initiated) paging message initiated by the base station, the UE identifier may refer to a UE identifier (e.g., the full UE connection resume identifier included in the RRC connection release message) capable of identifying the UE in the RRC inactive mode. When the paging message is a (CN-initiated) paging message initiated by a core network, the UE identifier may refer to a temporary UE identifier (e.g., a 5G S-temporary mobile subscription identifier (5G-S-TMSI)) capable of uniquely identifying the UE in the RRC idle mode in a specific area (e.g., a tracking area), which is a UE identifier provided to the UE 1h-01 by the core network. For reference, the sync cell 1h-02 may transmit the message (paging message) received from the CU in the base station of the cell to the UE 1h-01. The CU in the base station may additionally transmit the message or some of pieces of information included in the message to the data cells 1h-03, 1h-04, and 1h-05, which is to enable the data cells, when the UE 1h-01 later attempts to establish an RRC connection with the data cells 1h-03, 1h-04, and 1h-05, to know that the RRC connection is established due to the paging.

In operation 1h-51, the UE 1h-01 in the RRC idle mode or RRC inactive mode may select active data cell 1 1h-03. The UE 1h-01 may select active data cell 1 1h-03, based on the data cell-SSBs and/or data cell-SIBs transmitted by the active data cells 1h-03 and 1h-04. For reference, when it is impossible to perform operation 1h-51 (e.g., when it is impossible to select an appropriate active data cell), the UE 1h-01 may transmit a WUS to select an active data cell as in the foregoing embodiment. That is, when it is possible to select an active data cell, the UE 1h-01 may not transmit a WUS separately.

In operation 1h-55, the UE 1h-01 in the RRC idle mode or RRC inactive mode may establish an RRC connection with active data cell 1 1h-03. For example, when the UE 1h-01 is in the RRC idle mode, the UE 1h-01 may perform an RRC connection establishment procedure with active data cell 1 1h-03 to establish an RRC connection. When the UE 1h-01 is in the RRC inactive mode, the UE 1h-01 may perform an RRC connection resume procedure with active data cell 1 1h-03 to establish an RRC connection.

The sync cell 1h-02 according to the disclosure transmits a paging message to the UE 1h-01, but does not establish an RRC connection directly with the UE 1h-01. However, the data cell does not transmit a paging message to the UE 1h-01, but establishes an RRC connection directly with the UE 1h-01.

The UE 1h-01 according to the disclosure receives a paging message transmitted by the sync cell 1h-02, and determines whether it is possible to select the active data cell 1h-03 or 1h-04 without separately transmitting a wake-up signal when the paging message includes a paging UE identifier for waking up the UE 1h-01. That is, when it is possible to select the active data cell 1h-03, the UE 1h-01 according to the disclosure may establish an RRC connection with the selected active data cell 1h-03, and otherwise (when it is impossible to select an active data cell or when there is no active data cell), the UE 1h-01 may transmit a wake-up signal to the data cell 1h-03 or 1h-04 in order to establish an RRC connection with the data cell 1h-03.

FIG. 1I is a flowchart illustrating another example in which a UE receives a paging message from a sync cell and establishes or resumes an RRC connection with a data cell in a next-generation mobile communication system supporting network energy saving according to an embodiment of the disclosure.

Referring to FIG. 1I, a UE 1i-01 may establish an RRC connection with active data cell 1 1i-03 and be in an RRC connected mode (RRC_CONNECTED) (operation 1i-10). Data cell 1 1i-03 may be in an active state, and remaining data cells 1i-04 and 1i-05 may be in an inactive state.

In operation 1i-15, active data cell 1 1i-03 may transmit an RRC connection release message (RRCRelease) to the UE 1i-01 to transition the UE 1i-01 from the RRC connected mode to an RRC inactive mode (RRC_INACTIVE) or RRC idle mode (RRC_IDLE). For reference, active data cell 1 1i-03 may transmit the message (RRC connection release message) received from a CU in a base station of the cell to the UE 1i-01. The message may include RRC inactive mode configuration information. The RRC inactive mode configuration information may include at least one of the following.
- Full UE connection resume identifier (FullI-RNTI)
   **■** Identifier used to identify reserved UE context of the UE 1i-01, which may be configured with x bits (x being a positive integer). A sync cell 1i-02 may use the identifier when transmitting a RAN-initiated paging message to the UE 1i-01 in the RRC inactive mode.
- RAN paging cycle (ran-PagingCycle)
   **■** UE-specific paging cycle allocated by the base station to the UE 1i-01, which may be configured as a value of a specific radio frame. The UE 1i-01 may use the same to determine a timing for monitoring a paging occasion.
- RAN notification area information (ran-NotificationAreaInfo)
   **■** Configured for the sync cell 1i-02 to identify the location of a UE 1i-01 when the UE 1i-01 is the RRC inactive mode. The area information may include one or a plurality of sync cell lists or one or a plurality of RAN area configurations. A RAN area configuration may include at least one of an identifier indicating a mobile communication network to which the UE 1i-01 subscribes, and a RAN area. The RAN area may be configured by a single tracking area code (TAC), or by one tracking area code and one or multiple RAN area codes.

In operation 1i-20, the UE 1i-01 may transition from the RRC connected mode (RRC_CONNECTED) to the RRC idle mode (RRC_IDLE) or the RRC inactive mode (RRC_INACTIVE). For example, upon receiving the RRC connection release message including the inactive mode configuration information in operation 1i-15, the UE 1i-01 may transition to the RRC inactive mode by applying the message. When receiving the RRC connection release message having no active mode configuration information in operation 1i-15, the UE 1i-01 may transition to the RRC idle mode by applying the message.

In operation 1i-23, active data cell 1 1i-03 may be changed to the inactive state by a predetermined condition. For example, active data cell 1 1i-03 may be changed to the inactive state when not receiving a predetermined signal (e.g., a wake-up signal (WUS) transmitted by the UE 1i-01) from the UE 1i-01 for a certain time after transmitting the RRC connection release message.

In operation 1i-25, the UE 1i-01 in the RRC inactive mode or RRC idle mode may receive a synchronization signal (sync cell-SSB) transmitted by the sync cell 1i-02. The UE 1i-01 may select or camp on the sync cell 1i-02 (operation 1i-30). For example, when a signal quality of a sync cell selection reception signal derived from the received sync cell-SSB exceeds a predetermined threshold value, the UE 1i-01 may camp on the sync cell 1i-02.

In operation 1i-31, the UE 1i-01 may receive a synchronization cell-system information block (sync cell-SIB) transmitted by the sync cell 1i-02. The UE 1i-01 may perform a sync cell reselection procedure (operation 1i-32).

According to an embodiment, the sync cell-SSB (1i-25) and the sync cell-SIB (1i-31) may be periodically transmitted. In the disclosure, at least one of the following pieces of information may be included and transmitted through at least one of the sync cell-SSB and sync cell-SIB.
- Time/frequency resource for the UE 1i-01 to transmit a wake-up signal (WUS)
- Configuration information required for selecting or reselecting a sync cell
   **■** One or plurality of sync cell identifiers
   **■** One or plurality of frequencies on which sync cells operate
   **■** Cell reselection priority for each sync cell frequency
   **■** Parameter or threshold value required for selecting or reselecting a sync cell
- Each sync cell and data cell information (e.g., data cell identifier and data area code) associated with each sync cell
- Configuration information required for receiving DCI including at least one of a short message indicator, a short message, and paging message scheduling information
- Configuration information required for receiving a paging message

In operation 1i-35, the UE 1i-01 in the RRC inactive mode or RRC idle mode may monitor a paging occasion according to a specific period. That is, the UE 1i-01 may monitor a paging occasion and receive scheduling information for receiving a paging message to be transmitted by the sync cell 1i-02. Specifically, the UE 1i-01 may monitor a paging occasion, receive DCI with CRC scrambled by a P-RNTI from the sync cell 1i-02, and receive scheduling information for receiving a paging message.

In operation 1i-37, the UE 1i-01 in the RRC inactive mode or RRC idle mode may transmit a wake-up signal (WUS). The wake-up signal transmitted by the UE 1i-01 may be a dedicated signal for waking only a particular inactive data cell, or may be a common signal for commonly waking all inactive data cells (or all inactive data cells associated with a particular sync cell). All inactive data cells having received the WUS may become active. Alternatively, only inactive data cells that satisfy a predetermined condition (e.g., a received signal strength of the WUS exceeding a specific threshold value) among the inactive data cells having received the WUS may be switched to active data cells. In the disclosure, for convenience of description, inactive data cell 1 1i-03 may be switched to the active state (11-38), inactive data cell 2 1i-04 may be switched to the active state (1i-39), and data cell 3 1i-04 may remain in the inactive state.

According to an embodiment, the UE 1i-01 in the RRC inactive mode or RRC idle mode may not perform operation 1i-37. For example, when active data cells are transmitting a data cell-SSB and/or data cell-SIB and thus the UE 1i-01 is able to select an active data cell, the UE 1i-01 may not transmit a wake-up signal separately.

In operation 1i-40, the UE 1i-01 in the RRC inactive mode or RRC idle mode may receive a paging message transmitted by the sync cell 1i-02. The paging message may include a paging record including a UE identifier (e.g., a paging UE identifier, PagingUE-Identity) for paging the UE 1i-01. Here, when the paging message is a (RAN-initiated) paging message initiated by the base station, the UE identifier may refer to a UE identifier (e.g., the full UE connection resume identifier included in the RRC connection release message) capable of identifying the UE in the RRC inactive mode. When the paging message is a (CN-initiated) paging message initiated by a core network, the UE identifier may refer to a temporary UE identifier (e.g., a 5G S-temporary mobile subscription identifier (5G-S-TMSI)) capable of uniquely identifying the UE in the RRC idle mode in a specific area (e.g., a tracking area), which is a UE identifier provided to the UE 1i-01 by the core network. For reference, the sync cell 1i-02 may transmit the message (paging message) received from the CU in the base station of the cell to the UE 1i-01. The CU in the base station may additionally transmit the message or some of pieces of information included in the message to the data cells 1i-03, 1i-04, and 1i-05, which is to enable the data cells, when the UE 1i-01 later attempts to establish an RRC connection with the data cells 1i-03, 1i-04, and 1i-05, to know that the RRC connection is established due to the paging.

In operation 1i-43, active data cell 1 1i-03 may transmit a data cell synchronization signal (data cell-SSB) and/or data cell system information (data cell-SIB). According to an embodiment, the data cell-SSB and/or data cell-SIB may be periodically transmitted, or transmitted in response to a request of the UE 1i-01. Operation 1i-43 may be performed before operation 1i-40.

In operation 1i-44, active data cell 2 1i-04 may transmit a data cell synchronization signal (data cell-SSB) and/or data cell system information (data cell-SIB). According to an embodiment, the data cell-SSB and/or data cell-SIB may be periodically transmitted, or transmitted in response to a request from the UE 1i-01. Operation 1i-44 may be performed before operation 1i-40.

In operation 1i-50, the UE 1i-01 in the RRC idle mode or RRC inactive mode may select active data cell 1 1i-03. The UE 1i-01 may select active data cell 1 1i-03, based on the data cell-SSBs and/or data cell-SIBs transmitted by the active data cells 1i-03 and 1i-04.

In operation 1i-55, the UE 1i-01 in the RRC idle mode or RRC inactive mode may establish an RRC connection with active data cell 1 1i-03. For example, when the UE 1i-01 is in the RRC idle mode, the UE 1i-01 may perform an RRC connection establishment procedure with active data cell 1 1i-03 to establish an RRC connection. When the UE 1i-01 is in the RRC inactive mode, the UE 1i-01 may perform an RRC connection resume procedure with active data cell 1 1i-03 to establish an RRC connection.

The sync cell 1i-02 according to the disclosure transmits a paging message to the UE 1i-01, but does not establish an RRC connection directly with the UE 1i-01. However, the data cell does not transmit a paging message to the UE 1i-01, but establishes an RRC connection directly with the UE 1i-01.

The UE 1i-01 according to the disclosure receives paging scheduling information included in a short message indicator transmitted by the sync cell 1i-02 and then transmits a wake-up signal to the data cells 1i-03, 1i-04, and 1i-05. Specifically, the UE 1i-01 may rapidly wake up the inactive data cell 1i-03, 11-04, and 1i-05 before monitoring or receiving a paging message transmitted by the sync cell 1i-02, and the paged UE 1i-01 may rapidly select the corresponding active data cell 1i-03 to rapidly establish an RRC connection.

FIG. 1J is a diagram illustrating cells supporting network energy saving according to an embodiment of the disclosure.

Referring to FIG. 1J, a sync cell 1j-01 may be powered on. A cell that is in a powered-on state may be referred to as active, and the sync cell 1j-01 according to the disclosure may be always active. Main functions of the active sync cell may include some of the following functions.
- Broadcast of sync cell-synchronization signal block (SSB)
- Broadcast of sync cell-system information block (SIB)
- Transmission of short message indicator
   **■** A short message indicator may be transmitted through a DCI with a CRC scrambled by a P-RNTI. The short message indicator may include at least one of the following.
      ◆ Indicator indicating that only a short message exists in the DCI
      ◆ Indicator indicating that only paging scheduling information exists in the DCI
      ◆ Indicator indicating that both a short message and paging scheduling information exist in the DCI
      ◆ Indicator indicating whether a paging message exists
      ◆ Shortened UE identifier (ID) for identifying a UE
         - The shortened UE identifier may refer to an identifier including some information among UE identifiers applied to a paging UE identifier.
         - When the shortened UE identifier is received, an associated UE may monitor a paging channel from a data cell to receive a paging message.
         - The shortened UE identifier may be an identifier configured by a base station or a core network for a particular UE, or an identifier derived autonomously by the UE according to a particular equation.
- Transmission of short message
   **■** The short message may be transmitted through DCI in which a CRC is scrambled with a P-RNTI. That is, the short message may be transmitted through the same DCI as the short message indicator. The short message may include at least one of the following messages.
      **◆** Indicator indicating that predetermined system information among pieces of synchronization cell system information has been modified
      **◆** Indicator indicating whether there is a disaster notification among the pieces of synchronization cell system information
         - The disaster notification may refer to earthquake & tsunami warning system (ETWS) and/or commercial mobile alert service (CMAS) notifications.
- Mobility support of RRC_IDLE or RRC_INACTIVE UE

As described above, the sync cell 1j-01 may operate in a low-frequency band (e.g., 700 MHz) in which wide coverage is easily secured in order to transmit a control signal to a UE and efficiently support mobility of a UE in an RRC idle mode or RRC inactive mode. The sync cell 1j-01 may receive a short message indicator and a short message from a CU in the base station, and may transmit the same to the UE. For reference, when the CU transmits the short message indicator and the short message to the sync cell 1j-01, the CU may also transmit necessary information to data cells 1j-02, 1j-03, and 1j-04. For example, the CU may transmit a paging UE identifier associated with a shortened UE identifier included in the short message indicator to the data cells 1j-02, 1j-03, and 1j-04, or may transmit a paging record or a paging message to the data cells 1j-02, 1j-03, and 1j-04.

The data cells 1j-02, 1j-03, and 1j-04 may operate by separately including a wake-up receiver (hereinafter, WUR) that is capable of receiving a wake-up signal (WUS) transmitted by the UE 1j-05 and a main transceiver or main radio (hereinafter, MR) that is capable of transmitting/receiving all control signals and data other than a WUR to/from the UE 1j-05. Since it is difficult to predict when the UE 1j-05 transmits the WUS, the data cells 1j-02, 1j-03, and 1j-04 may always operate by powering on the WUR. However, when there is no data transmission between the UE 1j-05 and the data cells 1j-02, 1j-03, and 1j-04 for a predetermined time, the data cells 1j-02, 1j-03, and 1j-04 may power off or power on the MR for efficient energy saving. A cell state in which the MRs of the data cells are powered off may be referred to as inactive, and a cell state in which the MRs of the data cells 1j-02, 1j-03, and 1j-04 are powered on may be referred to as active. The data cells 1j-02, 1j-03, and 1j-04 according to the disclosure may become active data cells or inactive data cells according to a predetermined condition. For example, a particular data cell 1j-02 may change the state from inactive to active when receiving a WUS transmitted by the UE 1j-05 at a specific signal strength or higher. Main functions of the active data cell 1j-02 may include some of the following functions.
- Reception of wake-up signal (WUS) transmitted by UE
- Broadcast of data cell-synchronization signal block (SSB)
- Broadcast of data cell-system information (SIB)
- Support of random access procedure
- Support of RRC_CONNECTED UE and mobility thereof
- Transmission of paging message
   **■** The data cells 1j-02, 1j-03, and 1j-04 may receive the paging message from the CU in the base station, and may transmit the paging message to the UE 1j-05.

The main function of an inactive data cell 1j-03 or 1j-04 may include some of the following functions.
- Reception of wake-up signal (WUS) transmitted by the UE

Main functions of the UE 1j-05 may include some of the following functions.
- Sync cell selection or sync cell reselection for mobility support in RRC inactive mode or RRC idle mode
- Reception of short message indicator transmitted by sync cell
- Reception of paging message transmitted by data cell
- Transmission of wake-up signal
   **■** The wake-up signal may be transmitted to switch an inactive data cell to an active state.
   **■** The wake-up signal may include an indicator instructing a data cell to transmit a paging message.
- Performance of random access procedure with data cell and RRC connection establishment with data cell
- Data transmission/reception to/from data cell in RRC connected mode

FIG. 1K is a flowchart illustrating that a UE receives a short message indicator from a sync cell, receives a paging message from a data cell, and establishes or resumes an RRC connection with the data cell in a next-generation mobile communication system supporting network energy saving according to an embodiment of the disclosure.

Referring to FIG. 1K, a UE 1k-01 may establish an RRC connection with active data cell 1 1k-03 and be in an RRC connected mode (RRC_CONNECTED) (operation 1k-10). Data cell 1 1k-03 may be in an active state, and remaining data cells 1k-04 and 1k-05 may be in an inactive state.

In operation 1k-15, active data cell 1 1k-03 may transmit an RRC connection release message (RRCRelease) to the UE 1k-01 to transition the UE 1k-01 from the RRC connected mode to an RRC inactive mode (RRC_INACTIVE) or RRC idle mode (RRC_IDLE). For reference, active data cell 1 1k-03 may transmit the message (RRC connection release message) received from a CU in a base station of the cell to the UE 1k-01. The message may include a shortened UE identifier. The message may include partial information of a paging UE identifier for the UE 1k-01. The message may include RRC inactive mode configuration information. The RRC inactive mode configuration information may include at least one of the following.
- Full UE connection resume identifier (FullI-RNTI)
   **■** Identifier used to identify reserved UE context of the UE 1k-01, which may be configured with x bits (x being a positive integer). A sync cell 1k-02 may use the identifier when transmitting a RAN-initiated paging message to the UE 1k-01 in the RRC inactive mode.
- RAN paging cycle (ran-PagingCycle)
   **■** UE-specific paging cycle allocated by the base station to the UE 1k-01, which may be configured as a value of a specific radio frame. The UE 1k-01 may use the same to determine a timing for monitoring a paging occasion.
- RAN notification area information (ran-NotificationAreaInfo)
   **■** Configured for the sync cell 1k-02 to identify the location of a UE 1k-01 when the UE 1k-01 is the RRC inactive mode. The area information may include one or a plurality of sync cell lists or one or a plurality of RAN area configurations. A RAN area configuration may include at least one of an identifier indicating a mobile communication network to which the UE 1k-01 subscribes, and a RAN area. The RAN area may be configured by a single tracking area code (TAC), or by one tracking area code and one or multiple RAN area codes.

In operation 1k-20, the UE 1k-01 may transition from the RRC connected mode (RRC_CONNECTED) to the RRC idle mode (RRC_IDLE) or the RRC inactive mode (RRC_INACTIVE). For example, upon receiving the RRC connection release message including the inactive mode configuration information in operation 1k-15, the UE 1k-01 may transition to the RRC inactive mode by applying the message. When receiving the RRC connection release message having no active mode configuration information in operation 1k-15, the UE 1k-01 may transition to the RRC idle mode by applying the message.

In operation 1k-23, active data cell 1 1k-03 may be changed to the inactive state by a predetermined condition. For example, active data cell 1 1k-03 may be changed to the inactive state when not receiving a predetermined signal (e.g., a wake-up signal (WUS) transmitted by the UE 1k-01) from the UE 1k-01 for a certain time after transmitting the RRC connection release message.

In operation 1k-25, the UE 1k-01 in the RRC inactive mode or RRC idle mode may receive a synchronization signal (sync cell-SSB) transmitted by the sync cell 1k-02. The UE 1k-01 may select or camp on the sync cell 1k-02 (operation 1k-30). For example, when a signal quality of a sync cell selection reception signal derived from the received sync cell-SSB exceeds a predetermined threshold value, the UE 1k-01 may camp on the sync cell 1k-02.

In operation 1k-31, the UE 1k-01 may receive a synchronization cell-system information block (sync cell-SIB) transmitted by the sync cell 1k-02. The UE 1k-01 may perform a sync cell reselection procedure (operation 1k-32).

According to an embodiment, the sync cell-SSB (1k-25) and the sync cell-SIB (1k-31) may be periodically transmitted. In the disclosure, at least one of the following pieces of information may be included and transmitted through at least one of the sync cell-SSB and sync cell-SIB.
- Time/frequency resource for the UE 1k-01 to transmit a wake-up signal (WUS)
- Configuration information required for selecting or reselecting a sync cell
   **■** One or plurality of sync cell identifiers
   **■** One or plurality of frequencies on which sync cells operate
   **■** Cell reselection priority for each sync cell frequency
   **■** Parameter or threshold value required for selecting or reselecting a sync cell
- Each sync cell and data cell information (e.g., data cell identifier and data area code) associated with each sync cell
- Configuration information required for receiving DCI including at least one of a short message indicator, a short message, and paging message scheduling information
- Configuration information required for receiving a paging message

In operation 1k-35, the UE 1k-01 in the RRC inactive mode or RRC idle mode may monitor a paging occasion according to a specific period. The UE 1k-01 may receive a short message indicator through the paging occasion. The short message indicator may include at least one of the following pieces of information.
- Indicator indicating whether a paging message exists
- Shortened UE identifier for identifying the UE 1k-01
- Some UE identifier values among paging UE identifiers used to page the UE 1k-01 in a paging record included in a paging message

Specifically, the UE 1k-01 may monitor a paging occasion, receive DCI with a CRC scrambled by a P-RNTI from the sync cell 1k-02, and receive the short message indicator.

In operation 1k-37, the UE 1k-01 in the RRC inactive mode or RRC idle mode may transmit a wake-up signal (WUS). The wake-up signal transmitted by the UE 1k-01 may be a dedicated signal for waking only a particular inactive data cell, or may be a common signal for commonly waking all inactive data cells (or all inactive data cells associated with a particular sync cell). All inactive data cells having received the WUS may become active. Alternatively, only inactive data cells that satisfy a predetermined condition (e.g., a received signal strength of the WUS exceeding a specific threshold value) among the inactive data cells having received the WUS may be switched to active data cells. In the disclosure, for convenience of description, inactive data cell 1 1k-03 may be switched to the active state (1k-38), inactive data cell 2 1k-04 may be switched to the active state (1k-39), and data cell 3 1k-04 may remain in the inactive state. The WUS may include an indicator for requesting transmission of a paging message or partial information of the short message indicator received in operation 1k-35. In order to monitor a paging channel from a data cell and receive a paging message, the UE 1k-01 may transmit the WUS.

According to an embodiment, the UE 1k-01 in the RRC inactive mode or RRC idle mode may not perform operation 1k-37. For example, when active data cells are transmitting a data cell-SSB and/or data cell-SIB and thus the UE 1k-01 is able to select an active data cell, the UE 1k-01 may not transmit a wake-up signal separately.

In operation 1k-43, active data cell 1 1k-03 may transmit a data cell synchronization signal (data cell-SSB) and/or data cell system information (data cell-SIB). According to an embodiment, the data cell-SSB and/or data cell-SIB may be periodically transmitted, or transmitted in response to a request of the UE 1k-01. Operation 1k-43 may be performed before operation 1k-37.

In operation 1k-44, active data cell 2 1k-04 may transmit a data cell synchronization signal (data cell-SSB) and/or data cell system information (data cell-SIB). According to an embodiment, the data cell-SSB and/or data cell-SIB may be periodically transmitted, or transmitted in response to a request from the UE 1k-01. Operation 1k-44 may be performed before operation 1k-37.

In operation 1k-50, the UE 1k-01 in the RRC idle mode or RRC inactive mode may select active data cell 1 1k-03. The UE 1k-01 may select active data cell 1 1k-03, based on the data cell-SSBs and/or data cell-SIBs transmitted by the active data cells 1k-03 and 1k-04.

In operation 1k-55, the UE 1k-01 in the RRC idle mode or RRC inactive mode may receive a paging message transmitted by active data cell 1 1k-03. The paging message may include a paging record including a UE identifier (e.g., a paging UE identifier, PagingUE-Identity) for paging the UE 1k-01. Here, when the paging message is a (RAN-initiated) paging message initiated by the base station, the UE identifier may refer to a UE identifier (e.g., the full UE connection resume identifier included in the RRC connection release message) capable of identifying the UE in the RRC inactive mode. When the paging message is a (CN-initiated) paging message initiated by a core network, the UE identifier may refer to a temporary UE identifier (e.g., a 5G S-temporary mobile subscription identifier (5G-S-TMSI)) capable of uniquely identifying the UE in the RRC idle mode in a specific area (e.g., a tracking area), which is a UE identifier provided to the UE 1k-01 by the core network. For reference, the data cell 1k-03 may transmit the message (paging message) received from the CU in the base station of the cell to the UE 1k-01.

The paging UE identifier may include a shortened UE identifier. Alternatively, the paging UE identifier may be configured as information capable of uniquely identifying the UE when combined with a shortened UE identifier.

In operation 1k-60, the UE 1k-01 in the RRC idle mode or RRC inactive mode may establish an RRC connection with active data cell 1 1k-03. For example, when the UE 1k-01 is in the RRC idle mode, the UE 1k-01 may perform an RRC connection establishment procedure with active data cell 1 1k-03 to establish an RRC connection. When the UE 1k-01 is in the RRC inactive mode, the UE 1k-01 may perform an RRC connection resume procedure with active data cell 1 1k-03 to establish an RRC connection.

The sync cell 1k-02 according to the disclosure transmits a short message indicator to the UE 1k-01, but does not directly transmit a paging message to the UE 1k-01. However, the data cell not only transmits a paging message to the UE 1k-01, but also establishes an RRC connection directly with the UE 1k-01.

The UE 1k-01 according to the disclosure may receive a short message indicator transmitted by the sync cell 1k-02, and may transmit a wake-up signal according to the short message indicator. Specifically, when receiving the short message indicator transmitted by the sync cell 1k-02, the UE 1k-01 may transmit a wake-up signal to the data cells 1k-03, 1k-04, and 1k-05, select the active data cell 1k-03, and may determine whether the UE is paged, and the paged UE 1i-01 may establish an RRC connection with the selected active data cell 1k-03.

FIG. 1L is a flowchart illustrating that a UE receives a short message indicator from a sync cell, and immediately establishes or resumes an RRC connection to a data cell in a next-generation mobile communication system supporting network energy saving according to an embodiment of the disclosure.

Referring to FIG. 1L, a UE 11-01 may establish an RRC connection with active data cell 1 11-03 and be in an RRC connected mode (RRC_CONNECTED) (operation 11-10). Data cell 1 11-03 may be in an active state, and remaining data cells 11-04 and 11-05 may be in an inactive state.

In operation 11-15, active data cell 1 11-03 may transmit an RRC connection release message (RRCRelease) to the UE 11-01 to transition the UE 11-01 from the RRC connected mode to an RRC inactive mode (RRC_INACTIVE) or RRC idle mode (RRC_IDLE). For reference, active data cell 1 11-03 may transmit the message (RRC connection release message) received from a CU in a base station of the cell to the UE 11-01. The message may follow at least one of the foregoing embodiments. In addition, the message may include a shortened UE identifier.

In operation 11-20, the UE 11-01 may transition from the RRC connected mode (RRC_CONNECTED) to the RRC idle mode (RRC_IDLE) or the RRC inactive mode (RRC_INACTIVE). For example, upon receiving the RRC connection release message including inactive mode configuration information in operation 11-15, the UE 11-01 may transition to the RRC inactive mode by applying the message. When receiving the RRC connection release message having no active mode configuration information in operation 11-15, the UE 11-01 may transition to the RRC idle mode by applying the message.

In operation 11-23, active data cell 1 11-03 may be changed to the inactive state by a predetermined condition. For example, active data cell 1 11-03 may be changed to the inactive state when not receiving a predetermined signal (e.g., a wake-up signal (WUS) transmitted by the UE 11-01) from the UE 11-01 for a certain time after transmitting the RRC connection release message.

In operation 11-25, the UE 11-01 in the RRC inactive mode or RRC idle mode may receive a synchronization signal (sync cell-SSB) transmitted by the sync cell 11-02. The UE 11-01 may select or camp on the sync cell 11-02 (operation 11-30). For example, when a signal quality of a sync cell selection reception signal derived from the received sync cell-SSB exceeds a predetermined threshold value, the UE 11-01 may camp on the sync cell 11-02.

In operation 11-31, the UE 11-01 may receive a synchronization cell-system information block (sync cell-SIB) transmitted by the sync cell 11-02. The UE 11-01 may perform a sync cell reselection procedure (operation 11-32).

According to an embodiment, the sync cell-SSB (11-25) and the sync cell-SIB (11-31) may be periodically transmitted. In the disclosure, at least one of the following pieces of information may be included and transmitted through at least one of the sync cell-SSB and sync cell-SIB.
- Time/frequency resource for the UE 11-01 to transmit a wake-up signal (hereinafter, WUS)
- Configuration information required for selecting or reselecting a sync cell
   **■** One or plurality of sync cell identifiers
   **■** One or plurality of frequencies on which sync cells operate
   **■** Cell reselection priority for each sync cell frequency
   **■** Parameter or threshold value required for selecting or reselecting a sync cell
- Each sync cell and data cell information (e.g., data cell identifier and data area code) associated with each sync cell
- Configuration information required for receiving DCI including at least one of a short message indicator, a short message, and paging message scheduling information
- Configuration information required for receiving a paging message

In operation 11-35, the UE 11-01 in the RRC inactive mode or RRC idle mode may monitor a paging occasion according to a specific period. The UE 11-01 may receive a short message indicator through the paging occasion. The short message indicator may include at least one of the following pieces of information.
- Indicator indicating whether a paging message exists
- Shortened UE identifier for identifying the UE 11-01
- Some UE identifier values among paging UE identifiers used to page the UE 11-01 in a paging record included in a paging message

Specifically, the UE 11-01 may monitor a paging occasion, receive DCI with a CRC scrambled by a P-RNTI from the sync cell 11-02, and receive the short message indicator.

In operation 11-37, the UE 11-01 in the RRC inactive mode or RRC idle mode may transmit a wake-up signal (WUS). The wake-up signal transmitted by the UE 11-01 may be a dedicated signal for waking only a particular inactive data cell, or may be a common signal for commonly waking all inactive data cells (or all inactive data cells associated with a particular sync cell). All inactive data cells having received the WUS may become active. Alternatively, only inactive data cells that satisfy a predetermined condition (e.g., a received signal strength of the WUS exceeding a specific threshold value) among the inactive data cells having received the WUS may be switched to active data cells. In the disclosure, for convenience of description, inactive data cell 1 11-03 may be switched to the active state (11-38), inactive data cell 2 11-04 may be switched to the active state (11-39), and data cell 3 11-04 may remain in the inactive state. The UE 11-01 may transmit a WUS to identify whether the UE has actually been paged, by initiating an RRC connection establishment or RRC connection resume procedure with a data cell.

According to an embodiment, the UE 11-01 in the RRC inactive mode or RRC idle mode may not perform operation 11-37. For example, when active data cells are transmitting a data cell-SSB and/or data cell-SIB and thus the UE 11-01 is able to select an active data cell, the UE 11-01 may not transmit a wake-up signal separately.

In operation 11-43, active data cell 1 11-03 may transmit a data cell synchronization signal (data cell-SSB) and/or data cell system information (data cell-SIB). According to an embodiment, the data cell-SSB and/or data cell-SIB may be periodically transmitted, or transmitted in response to a request of the UE 11-01. Operation 11-43 may be performed before operation 11-37.

In operation 11-44, active data cell 2 11-04 may transmit a data cell synchronization signal (data cell-SSB) and/or data cell system information (data cell-SIB). According to an embodiment, the data cell-SSB and/or data cell-SIB may be periodically transmitted, or transmitted in response to a request from the UE 11-01. Operation 11-44 may be performed before operation 11-37.

In operation 11-50, the UE 11-01 in the RRC idle mode or RRC inactive mode may select active data cell 1 11-03. The UE 11-01 may select active data cell 1 11-03, based on the data cell-SSBs and/or data cell-SIBs transmitted by the active data cells 11-03 and 11-04.

In operation 11-60, the UE 11-01 in the RRC idle mode or RRC inactive mode may establish an RRC connection with active data cell 1 11-03. For example, when the UE 11-01 is in the RRC idle mode, the UE 11-01 may perform an RRC connection establishment procedure with active data cell 1 11-03 to establish an RRC connection. When the UE 11-01 is in the RRC inactive mode, the UE 11-01 may perform an RRC connection resume procedure with active data cell 1 11-03 to establish an RRC connection.

In the above case, the UE 11-01 in the RRC idle mode or RRC inactive mode may transmit an RRC connection establishment request message or an RRC connection resume request message to active data cell 1 11-03. The message may include information excluding a shortened UE identifier among identifier information capable of identifying the UE 11-01. Alternatively, the message may include the identifier information capable of identifying the UE 11-01. In response to the message, active data cell 1 11-03 may determine whether the UE 11-01 is an actually paged UE, and may transmit an RRC connection establishment message or an RRC connection resume message to the UE 11-01 when the UE is a paged UE. When the UE 11-01 is not an actually paged UE, active data cell 1 11-03 may transmit an RRC connection rejection message to the UE 11-01 in response to the received RRC connection establishment request message or RRC connection resume request message. Upon receiving the RRC connection rejection message, the UE 11-01 may identify that the UE is not a paged UE through this message.

The sync cell 11-02 according to the disclosure transmits only a short message indicator to the UE 11-01. The data cell 11-03 does not transmit a paging message to the UE 11-01, and receives an RRC connection establishment request message or an RRC connection resume request message from the UE 11-01 to determine whether the UE 11-01 is an actually paged UE. That is, the data cell 11-03 establishes an RRC connection with a paged UE, and does not establish an RRC connection for a non-paged UE.

FIG. 1M is a flowchart illustrating a power state change of a data cell in a next-generation mobile communication system supporting network energy saving according to an embodiment of the disclosure.

Referring to FIG. 1M, a UE 1m-01 does not establish an RRC connection with a data cell, and may thus be in an RRC idle mode (RRC_IDLE) or RRC inactive mode (RRC_INACTIVE) (operation 1m-04).

In operation 1m-05, data cells 1m-02 and 1m-03 may be in an inactive state (inactive mode).

In operation 1m-10, the UE 1m-01 may transmit a wake-up signal (WUS) to the data cells 1m-02 and 1m-03. For example, the UE 1m-01 may be paged and transmit a wake-up signal to wake up an inactive data cell in order to establish an RRC connection.

In operation 1m-15, data cell 1 1m-02 may start a predetermined timer, and may become active. For example, when data cell 1 1m-02 receives a WUS transmitted by the UE 1m-01 or when a signal strength of the received WUS is greater than a specific threshold value, data cell 1 1m-02 may start the predetermined timer and become active.

In operation 1m-20, data cell 2 1m-03 may start a predetermined timer, and may become active. For example, when data cell 2 1m-03 receives a WUS transmitted by the UE 1m-01 or when a signal strength of the received WUS is greater than a specific threshold value, data cell 2 1m-03 may start the predetermined timer and become active.

In operation 1m-25, active data cell 1 1m-02 may transmit a data cell-SSB and/or a data cell-SIB. Additionally, data cell 1 1m-02 may transmit a paging message to the UE 1m-01.

In operation 1m-30, active data cell 2 1m-03 may transmit a data cell-SSB and/or a data cell-SIB. Additionally, data cell 2 1m-03 may transmit a paging message to the UE 1m-01.

In operation 1m-35, the UE 1m-01 may establish an RRC connection with data cell 1 1m-02, and may transition to an RRC connected mode (RRC_CONNECTED).

In operation 1m-40, data cell 1 1m-02 may stop the timer started in operation 1m-15 (if the timer is operating). For example, data cell 1 1m-02 may stop the timer when the RRC connection with the UE 1m-01 is established. According to an embodiment, data cell 1 1m-02 may stop and restart the timer started in operation 1m-15 upon receiving an additional signal from the UE 1m-01, and may stop the started timer when transmitting an RRC connection setup message (e.g., an RRC connection establishment message or RRC connection resume message). Alternatively, data cell 1 1m-02 may stop the timer being operating upon receiving an RRC connection setup complete message (e.g., an RRC connection establishment complete message or RRC connection resume complete message) from the UE 1m-01.

In operation 1m-45, the timer started by data cell 2 1m-03 in operation 1m-20 may expire.

In operation 1m-50, data cell 2 1m-03 may be switched to the inactive state.

FIG. 1N is a flowchart illustrating a signaling exchange procedure between a CU and a DU in a next-generation mobile communication system supporting network energy saving according to an embodiment of the disclosure.

Referring to FIG. 1N, a next-generation base station (g Node B, hereinafter, gNB, Node B, or base station) 1n-01 may include a central unit (CU) 1n-02 and one or more distributed units (DUs) 1n-03 and 1n-04. For convenience of description, the disclosure shows that the CU 1n-02 may support two DUs 1n-03 and 1n-04. A single DU 1n-03 or 1n-04 may support only one or more sync cells 1n-06, may support one or more data cells 1n-05 and 1n-07, or may simultaneously support one or more sync cells 1n-06 and one or more data cells 1n-05 and 1n-07. For convenience of description, the disclosure shows that DU 1 1n-03 supports one data cell 1n-05, and DU 2 1n-04 supports one sync cell 1n-06 and one data cell 1n-07.

In operation 1n-10, the CU 1n-02 may transmit a paging message to DU 1 1n-03 and DU 2 1n-04.

In operation 1n-15, DU 2 1n-04 may transmit the paging message received from the CU 1n-02 to the sync cell 1n-06 and/or the data cell 1n-07.

In operation 1n-20, DU 1 1n-03 may transmit the paging message received from the CU 1n-02 to the data cell 1n-05.

In operation 1n-25, the sync cell 1n-06 may transmit the paging message to UEs 1n-09 and 1n-08. According to an embodiment, the data cell 1n-07 may also transmit the paging message to the UEs 1n-09 and 1n-08.

In operation 1n-30, UE 1 1n-09 may transmit a wake-up signal (WUS). According to an embodiment, UE 2 1n-08 may also transmit a WUS.

In operation 1n-35, the data cells 1n-05 and 1n-07 may be in an active state.

In operation 1n-40, UE 1 1n-09 may establish an RRC connection with the base station 1n-01.

In operation 1n-45, UE 2 1n-08 may establish an RRC connection with the base station 1n-01.

In operation 1n-50, when all UEs included in the paging message in operation 1n-10 have been paged and successfully established an RRC connection, the CU 1n-02 may transmit an indicator or information indicating that the data cell 1n-05 supported by DU 1 1n-03 may be powered off to switch to an inactive state to DU 1 1n-03. DU 1 1n-03 may transmit the indicator or information to the data cell 1n-05 (operation 1n-55). The data cell 1n-05 may switch to the inactive state (operation 1n-60).

In the disclosure, when the paged UE(s) 1n-09 or 1n-08 successfully establishes the RRC connection with the base station 1n-01, the CU 1n-02 in the base station transmits information or an indicator indicating that DUs 1n-03 that do not need to communicate with the UEs 1n-09 and 1n-08 may be powered off, which is to assist in powering off the data cell 1n-05 of the DU 1n-03 that does not require communication with a UE because the CU 1n-02 in the base station may know which UEs are paged and whether the UEs have established an RRC connection. In addition, the CU 1n-02 in the base station may not provide information indicating that a data cell may be powered off even though there is no UE connected to the data cell of a particular DU, which is to efficiently support mobility of a UE in an RRC connected mode even though there is no UE connected to the particular DU.

Since the data cell supported by the DU may be powered off based on a timer as in the foregoing embodiment, the data cell may notify the DU of a power state, and the DU may also notify the CU of the power state, thereby enabling the DU and the CU to be synchronized with respect to the power state of each data cell.

FIG. 1O is a block diagram illustrating an internal structure of a UE according to an embodiment of the disclosure.

Referring to FIG. 1O, the UE may include a radio frequency (RF) processor 1o-10, a baseband processor 1o-20, a storage 1o-30, and a controller 1o-40.

The RF processor 1o-10 may perform functions for transmitting/receiving signals through a radio channel, such as signal band conversion and amplification. That is, the RF processor 1o-10 may up-convert a baseband signal provided from the baseband processor 1o-20 to an RF band signal, may transmit the same through an antenna, and may down-convert an RF band signal received through the antenna to a baseband signal. For example, the RF processor 1o-10 may include a transmission filter, a reception filter, an amplifier, a mixer, an oscillator, a digital-to-analog converter (DAC), an analog-to-digital converter (ADC), and the like. Although only one antenna is illustrated in FIG. 1O, the UE may include multiple antennas. In addition, the RF processor 1o-10 may include multiple RF chains. Furthermore, the RF processor 1o-10 may perform beamforming. For the beamforming, the RF processor 1o-10 may adjust the phase and magnitude of signals transmitted/received through multiple antennas or antenna elements, respectively. In addition, the RF processor 1o-10 may perform MIMO, and may receive multiple layers when performing MIMO operations.

The baseband processor 1o-20 may perform functions of conversion between baseband signals and bitstrings according to the physical layer specifications of the system. For example, during data transmission, the baseband processor 1o-20 may encode and modulate a transmitted bitstring to generate complex symbols. In addition, during data reception, the baseband processor 1o-20 may demodulate and decode a baseband signal provided from the RF processor 1o-10 to restore a received bitstring. For example, when following the orthogonal frequency division multiplexing (OFDM) scheme, during data transmission, the baseband processor 1o-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1o-20 may split a baseband signal provided from the RF processor 1o-10 at the OFDM symbol level, may restore signals mapped to subcarriers through a fast Fourier transform (FFT) operation, and may restore a received bitstring through demodulation and decoding.

The baseband processor 1o-20 and the RF processor 1o-10 may transmit and receive signals as described above. Therefore, the baseband processor 1o-20 and the RF processor 1o-10 may be referred to as a transmitter, a receiver, a transceiver, or a communication unit. Furthermore, at least one of the baseband processor 1o-20 and the RF processor 1o-10 may include multiple communication modules to support multiple different radio access technologies. In addition, at least one of the baseband processor 1o-20 and the RF processor 1o-10 may include different communication modules to process signals in different frequency bands. For example, the different radio access technologies may include a wireless local area network (LAN) (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1o-30 may store basic programs, application programs, and data, such as configuration information, for the operation of the UE. In addition, the storage 1o-30 may provide the stored data at the request of the controller 1o-40.

The controller 1o-40 controls the overall operation of the UE. For example, the controller 1o-40 may transmit/receive signals through the baseband processor 1o-20 and the RF processor 1o-10. In addition, the controller 1o-40 records data in the storage 1o-30 and reads the data from the storage 1o-30. To this end, the controller 1o-40 may include at least one processor. For example, the controller 1o-40 may include a communication processor (CP) configured to perform control for communication, and an application processor (AP) configured to control upper layers such as application programs.

FIG. 1P is a block diagram illustrating a structure of an NR base station according to an embodiment of the disclosure.

Referring to FIG. 1P, the base station may include an RF processor 1p-10, a baseband processor 1p-20, a backhaul communicator 1p-30, a storage 1p-40, and a controller 1p-50.

The RF processor 1p-10 may perform functions for transmitting/receiving signals through a radio channel, such as signal band conversion and amplification. That is, the RF processor 1p-10 may up-convert a baseband signal provided from the baseband processor 1p-20 to an RF band signal, may transmit the same through an antenna, and may down-convert an RF band signal received through the antenna to a baseband signal. For example, the RF processor 1p-10 may include a transmission filter, a reception filter, an amplifier, a mixer, an oscillator, a DAC, and an ADC. Although only one antenna is illustrated in FIG. 1P, the base station may include multiple antennas. In addition, the RF processor 1p-10 may include multiple RF chains. Furthermore, the RF processor 1p-10 may perform beamforming. For the beamforming, the RF processor 1p-10 may adjust the phase and magnitude of signals transmitted/received through multiple antennas or antenna elements, respectively. The RF processor 1p-10 may transmit one or more layers to perform a downward MIMO operation.

The baseband processor 1p-20 may perform functions of conversion between baseband signals and bitstrings according to the physical layer specifications of a first radio access technology. For example, during data transmission, the baseband processor 1p-20 may encode and modulate a transmitted bitstring to generate complex symbols. In addition, during data reception, the baseband processor 1p-20 may demodulate and decode a baseband signal provided from the RF processor 1p-10 to restore a received bitstring. For example, when following the OFDM scheme, during data transmission, the baseband processor 1p-20 may encode and modulate a transmitted bitstring to generate complex symbols, may map the complex symbols to subcarriers, and may configure OFDM symbols through IFFT operation and CP insertion. In addition, during data reception, the baseband processor 1p-20 may split a baseband signal provided from the RF processor 1p-10 at the OFDM symbol level, may restore signals mapped to subcarriers through FFT operation, and may restore a received bitstring through demodulation and decoding. The baseband processor 1p-20 and the RF processor 1p-10 may transmit and receive signals as described above. Therefore, the baseband processor 1p-20 and the RF processor 1p-10 may be referred to as a transmitter, a receiver, a transceiver, or a communication unit.

The backhaul communication unit 1p-30 provides an interface for communicating with other nodes in the network. That is, the backhaul communication unit 1p-30 converts bitstrings transmitted from the main base station to other nodes, for example, an auxiliary base station, a core network, etc., into physical signals, and converts physical signals received from the other nodes into bitstrings.

The storage 1p-40 may store basic programs, application programs, and data, such as configuration information, for the operation of the base station. Particularly, the storage 1p-40 may store information regarding a bearer allocated to a connected UE, a measurement result reported from the connected UE, and the like. In addition, the storage 1p-40 may store information serving as criteria for determining whether to provide multi-connection to a UE or to suspend the same. In addition, the storage 1p-40 may provide the stored data at the request of the controller 1p-50.

The controller 1p-50 controls the overall operation of the base station. For example, the controller 1p-50 transmits/receives signals through the baseband processor 1p-20 and the RF processor 1p-10 or through the backhaul communication unit 1p-30. In addition, the controller 1p-50 records data in the storage 1p-40 and reads the data from the storage 1p-40. To this end, the controller 1p-50 may include at least one processor.

It should be noted that the configuration diagrams, illustrative diagrams of control/data signal transmission methods, illustrative diagrams of operation procedures, and structural diagrams as illustrated in FIGS. 1A to 1P are not intended to limit the scope of protection of the disclosure. That is, all the constituent units, entities, or operations shown in FIGS. 1A to 1P should not be construed as essential elements for implementing the disclosure, and even when including only some of the elements, the disclosure may be implemented without impairing the true nature of the disclosure.

The above-described operations of a base station or a terminal may be implemented by providing a memory device storing corresponding program codes in a bast station or terminal device. That is, a controller of the base station or terminal device may perform the above-described operations by reading and executing the program codes stored in the memory device by means of a processor or central processing unit (CPU).

Various units and modules of a network entity, a base station device, or a terminal device may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A method performed by a terminal in a wireless communication system, the method comprising:
in case that the terminal is in a radio resource control (RRC) inactive state or an RRC idle state, receiving, from a synchronization cell, information associated with transmission of a paging message;
based on the information associated with the transmission of the paging message, receiving the paging message comprising information indicating the terminal;
selecting a data cell; and
based on the paging message, performing an RRC connection procedure with the data cell.

2. The method of claim 1, wherein the selecting of the data cell comprises:
in case that there is no appropriate data cell, transmitting a wake-up signal to at least one data cell;
receiving at least one of a synchronization signal or system information from the at least one data cell; and
based on the at least one of the synchronization signal or the system information, selecting the data cell from among the at least one data cell.

3. The method of claim 1, wherein the paging message is transmitted from one of the synchronization cell or the data cell.

4. The method of claim 1, further comprising:
transmitting a wake-up signal to at least one data cell before receiving the paging message, based on reception of the information associated with the transmission of the paging message.

5. A method performed by a base station in a wireless communication system, the method comprising:
in case that a terminal is in a radio resource control (RRC) inactive state or an RRC idle state, transmitting information associated with transmission of a paging message to a terminal on a synchronization cell;
based on the information associated with the transmission of the paging message, transmitting, to the terminal, the paging message comprising information indicating the terminal; and
based on the paging message, receiving, from the terminal, a message requesting an RRC connection to a data cell selected by the terminal.

6. The method of claim 5, further comprising:
in case that there is no appropriate data cell, receiving, from the terminal, a wake-up signal transmitted to at least one data cell; and
transmitting at least one of a synchronization signal or system information to the terminal on the at least one data cell,
wherein the data cell is selected from among the at least one data cell, based on the at least one of the synchronization signal or the system information.

7. The method of claim 5, wherein the paging message is transmitted from one of the synchronization cell or the data cell.

8. The method of claim 5, further comprising:
receiving, from the terminal, a wake-up signal transmitted to at least one data cell before transmitting the paging message, based on transmission of the information associated with the transmission of the paging message.

9. A terminal in a wireless communication system, the terminal comprising:
a transceiver; and
a controller configured to:
in case that the terminal is in a radio resource control (RRC) inactive state or an RRC idle state, receive information associated with transmission of a paging message from a synchronization cell through the transceiver,
based on the information associated with the transmission of the paging message, receive the paging message comprising information indicating the terminal through the transceiver,
select a data cell, and
based on the paging message, perform an RRC connection procedure with the data cell.

10. The terminal of claim 9, wherein the controller is configured to:
in case that there is no appropriate data cell, transmit a wake-up signal to at least one data cell through the transceiver;
receive at least one of a synchronization signal or system information from the at least one data cell through the transceiver; and
based on the at least one of the synchronization signal or the system information, select the data cell from among the at least one data cell.

11. The terminal of claim 9, wherein the paging message is transmitted from one of the synchronization cell or the data cell.

12. The terminal of claim 9, wherein the controller is configured to transmit a wake-up signal to at least one data cell through the transceiver before receiving the paging message, based on reception of the information associated with the transmission of the paging message.

13. A base station in a wireless communication system, the base station comprising:
a transceiver; and
a controller configured to:
in case that a terminal is in a radio resource control (RRC) inactive state or an RRC idle state, transmit information associated with transmission of a paging message to the terminal on a synchronization cell through the transceiver,
based on the information associated with the transmission of the paging message, transmit the paging message comprising information indicating the terminal to the terminal through the transceiver, and
based on the paging message, receive, from the terminal through the transceiver, a message requesting an RRC connection to a data cell selected by the terminal.

14. The base station of claim 13,
wherein the controller is configured to:
in case that there is no appropriate data cell, receive, from the terminal through the transceiver, a wake-up signal transmitted to at least one data cell, and
transmit at least one of a synchronization signal or system information to the terminal on the at least one data cell through the transceiver,
wherein the data cell is selected from among the at least one data cell, based on the at least one of the synchronization signal or the system information, and
wherein the paging message is transmitted from one of the synchronization cell or the data cell.

15. The base station of claim 13, wherein the controller is configured to receive, from the terminal through the transceiver, a wake-up signal transmitted to at least one data cell before transmitting the paging message, based on transmission of the information associated with the transmission of the paging message.
